Europäisches Patentamt

European Patent Office

Office européen des brevets

(11) Veröffentlichungsnummer: **0 288 699 B1**

(12) **EUROPÄISCHE PATENTSCHRIFT**

(45) Veröffentlichungstag der Patentschrift: **04.03.92**

(21) Anmeldenummer: **88103774.1**

(22) Anmeldetag: **10.03.88**

(51) Int. Cl.⁵: **B65G 27/08**, B65G 27/24, H02K 33/02

(30) Priorität: **25.04.87 DE 3713980**

(43) Veröffentlichungstag der Anmeldung:
**02.11.88 Patentblatt 88/44**

(45) Bekanntmachung des Hinweises auf die
Patenterteilung:
**04.03.92 Patentblatt 92/10**

(84) Benannte Vertragsstaaten:
**CH DE FR GB IT LI**

(56) Entgegenhaltungen:
**DE-A- 2 313 093      DE-A- 3 305 998
DE-B- 1 255 815      DE-B- 1 274 971
DE-C- 909 004        DE-C- 974 963
US-A- 3 575 620**

(73) Patentinhaber: **Vossloh Schwabe GmbH
Wasenstrasse 25
W-7068 Urbach(DE)**

(72) Erfinder: **Die Erfinder haben auf ihre Nennung verzichtet**

(74) Vertreter: **Rüger, Rudolf, Dr.-Ing. et al
Patentanwälte Dr.-Ing. R. Rüger Dipl.-Ing. H.P.
Barthelt Webergasse 3 Postfach 348
W-7300 Esslingen/Neckar(DE)**

(54) **Schwingförderer.**

**Beschreibung**

Die Erfindung betrifft einen als Kreis- oder Linearförderer ausgebildeten Schwingförderer, mit den Merkmalen des Oberbegriffs des Patentanspruches 1.

In der DE-B-1 274 971 ist ein Vibrationsförderer offenbart, bei dem ein zylindrischer Behälter mittels streifenförmiger Federelemente an einer Grundplatte federnd aufgehängt ist.

Zwischen dem zylindrischen Behälter und der Grundplatte verbleibt ein Zwischenraum, in dem Schwingantriebe angeordnet sind. Die Schwingantriebe weisen drei Elektromagnete (Statoren), die auch als Schwingankermotoren bezeichnet werden können, auf, vor denen im Abstand jeweils ein Anker angeordnet ist. Die Anker sind mit Winkeln an dem zylindrischen Behälter befestigt, und die Elektromagnete sind an der Grundplatte angeschraubt.

Um eine zweckentsprechende Funktion zu gewährleisten, müssen die Elektromagnete und die mittels Blechwinkeln befestigten Anker in ihrer Lage zueinander jeweils einzeln justiert werden, was nicht einfach genug geschehen kann.

Bei einem in der DE-C-974 963 offenbarten, als elektromagnetischer Schwingmotor bezeichneten Kreisförderer ist eine an einer Grundplatte mittels schräg angeordneter Lenkerfedern angebaute Förderschale vorgesehen. Zwischen der Grundplatte und der Förderschale ist ein Zwischenraum vorhanden, in dem ein Magnetkreis angeordnet ist. Der Magnetkreis weist Luftspalte auf, die mit der Grundplatte den gleichen Winkel einschließen wie die Lenkerfedern.

Dieser elektromagnetische Schwingmotor ist relativ aufwendig zu montieren; wegen der speziellen Ausbildung des Magnetkreises ist die Leistung des Schwingmotors beschränkt.

Bei einem aus dem US-PS 3048 260 in mehreren Ausführungsformen bekannten Schwingförderer umfassen die Antriebsmittel der Schwingplatte eine Anzahl Schwingankermotoren, die gemeinsam mit jedem Schwingankermotor einzeln zugeordneten Blattfederpaketen zu Antriebs-Baueinheiten zusammengefaßt sind. Jede dieser Baueinheiten weist eine den Stator tragende, etwa rechteckige Sockelplatte und eine den angeschraubten Anker tragende Hilfsschwingplatte auf, die gegen die Sockelplatte über die Blattfederpakete abgestützt ist. Mit ihren Sockel- und Hilfsschwingplatten sind die Baueinheiten jeweils mittels mittiger Befestigungsbolzen an einem gemeinsamen Grundgestell bzw. der gemeinsamen Schwingplatte des Schwingförderers befestigt. Um die Standfestigkeit zu erhöhen, ist das Grundgestell, insbesondere bei der Ausbildung als Kreisförderer, als ein eine zusätzliche träge Masse aufweisendes Gußteil ausgebildet.

Da die länglichen Federelemente an den einzelnen Antriebs-Baueinheiten in vorgegebener fester räumlicher Zuordnung zu deren Polflächen stehen, ergibt sich insbesondere bei der Ausbildung als Kreisförderer eine komplizierte Anordnung mit windschiefen Querachsen der Baueinheiten an dem Grundgestell und der gemeinsamen Schwingplatte. Um ungünstige Schwingungsverhältnisse und damit die Ausbildung sogenannter toter Zonen auf der gemeinsamen Schwingplatte zu vermeiden, müssen die einzelnen Baueinheiten in ihrer räumlichen Lage nach dem Einbau exakt einjustiert werden, was umständlich und aufwendig ist. Wegen der prinzipbedingt ungünstigen Antriebsverhältnisse der gemeinsamen Schwingplatte ist der Wirkungsgrad eines solchen Schwingförderers auch begrenzt.

Eine günstigere Anordnung der Federelemente weist demgegenüber ein aus der DE-OS 2051 573 bekanntes Antriebsaggregat zur Erzeugung von gleichzeitigen Hub- und Drehschwingungen, insbesondere für Wendelförderer, mit zwei relativ zueinander beweglichen Teilen auf, bei dem diese beiden Teile und die die Federelemente bildenden Verbindungselemente dieser Teile zu einem aus Kunststoff bestehenden Körper zusammengefaßt sind. Dieser Kunststoffkörper hat im wesentlichen die Form eines Topfes mit durchbrochener Topfwand, dessen ringförmiger Topfrand von dem einen der beiden Teile, dessen durchbrochene Topfwand von den Verbindungs- oder Federelementen und dessen Topfboden von dem anderen der beiden Teile gebildet ist. Abgesehen davon, daß der einstückige Kunststoffkörper zu seiner Herstellung aufwendige und komplizierte Formen erfordert, sind die auf diese Weise erzeugbaren Federkräfte wegen der elastischen Eigenschaften der zur Verfügung stehenden Kunststoffe begrenzt. Auch muß der Kunststoffkörper in einer mit dem Chassis verbundenen topfartigen Hülse untergebracht werden. Als Antrieb dient ein einziger koaxialer Schwingankermotor, der in dem Kunststoffkörper untergebracht ist und eine zu der Drehachse koaxiale Kraft auf den mit dem plattenförmigen einen Teil des Kunststoffkörpers verbundenen Anker ausübt. Die Ausbildung eines Linearförderers ist auf diese Weise nicht möglich.

Aufgabe der Erfindung ist es, einen Schwingförderer zu schaffen, der sich bei einfachem Aufbau und preisgünstiger Herstellung durch einen hohen Wirkungsgrad und leichte Justier- und Montagemöglichkeit sowohl in der Ausbildung als Kreisförderer als auch als Linearförderer auszeichnet.

Zur Lösung dieser Aufgabe weist der eingangs genannte Schwingförderer erfindungsgemäß die Merkmale des kennzeichnenden Teils des Patentanspruches 1 auf.

Die an der Schwingplatte befestigten, längs deren Berandung fein verteilt angeordneten diskreten Federelemente gewährleisten eine einfache Konstruktion, bei der die Federelemente in ihrer Zahl und ihrer Ausbildung dem jeweiligen Einsatzzweck angepaßt werden können.Die Schwingankermotoren, die gleichen Aufbau aufweisen, sind raumsparend untergebracht und erlauben einen optimalen Antrieb der Schwingplatte unter Vermeidung toter Zonen. Da der Stator und der Anker jeweils aus geschichteten Blechpaketen besteht, treten sehr geringe Verluste auf, womit zusätzlich zu den günstigen Herstellungsverhältnissen sich auch ein hoher Wirkungsgrad ergibt. Wegen der räumlich gleichen Ausrichtung der Polflächen ist darüber hinaus die Justage des Gerätes leicht zu bewerkstelligen.

Dadurch,daß das Statorblechpaket wenigstens eine einseitig zumindest teilweise durch wenigstens eine Statorpolfläche begrenzte Öffnung aufweist, in die ein mit seiner Polfläche auf die Statorpolfläche ausgerichteter Anker ragt, der in der Öffnung mit Spiel begrenzt beweglich ist, wird mit einfachen Mitteln die von dem Statorblechpaket gebildete, für die Standfestigkeit des Schwingförderers erforderliche träge Masse erhöht.

Die Statorpolflächen können rechtwinklig zu der Schwingplatte verlaufend oder mit dieser einen Winkel <90° einschließend angeordnet sein. Insbesondere bei Schwingförderern kleinerer Leistung kann mit Vorteil die Anordnung derart getroffen sein, daß der Stator und/oder der Anker wenigstens zweier Schwingankermotoren jeweils durch ein diesen Schwingankermotoren gemeinsames Stator- bzw. Ankerblechpaket gebildet sind. Alternativ ist naturgemäß auch eine getrennte Anordnung der einzelnen Stator- und/oder Ankerblechpakete auf einem gemeinsamen Träger, bspw. einer Grundplatte bzw. der Schwingplatte, möglich. Auch können die Polstücke an dem jeweiligen Statorblechpaket einstückig angeschnitten sein, wodurch sich eine weitere Vereinfachung der Herstellung ergibt. Abhängig von dem Stanzbild der Bleche kann es z.B. zur Vermeidung von Stanzabfall aber auch denkbar sein, die Polstücke aus getrennt ausgestanzten Blechen auszubilden und die geschichteten Polstücke dann als Einzelteile an dem Statorblechpaket zu befestigen.

Es ergeben sich sehr einfache Verhältnisse hinsichtlich der Unterbringung und Anordnung der Erregerspule, wenn das die jeweilige Statorpolfläche tragende, an die Öffnung anschließend angeordnete Polstück auf zwei gegenüberliegenden Seiten durch zwei die Öffnung führende Schlitze begrenzt ist, in denen die Spulenseiten der Erregerspule aufgenommen sind. Zusätzlich kann das Polstück eine kleinere Höhe als das Statorblechpaket aufweisen, wobei zwischen dem Polstück und den zugeordneten Breitseiten des Statorblechpaketes die Wickelköpfe der Erregerspulen aufnehmende Vertiefungen ausgebildet sind, die mit Vorteil eine zumindest die Höhe eines Wickelkopfes entsprechende Tiefe aufweist. Bei dieser Ausbildung des Statorblechpaketes ist die Erregerspule vollständig in dem Statorblechpaket untergebracht, das nach dem Aufsetzen der Erregerspule in der üblichen Weise imprägniert werden kann, so daß die Erregerspule lagefest durch das Imprägniermaterial fixiert und mit diesem vergossen ist. Da die Erregerspule nicht über das Blechpaket vorsteht, sondern in diesem vollständig aufgenommen ist, sind auch zur Montage des vorgefertigten Statorteils keine besonderen Vorsichtsmaßregeln erforderlich.

Zur Erleichterung der Montage ist es außerdem zweckmäßig, daß die Öffnung in der Verlängerung des Polstückes eine die axiale Länge der Erregerspule übersteigende lichte Weite aufweist, derart, daß die Erregerspule in die Öffnung einführbar und von dieser aus auf das Polstück aufschiebbar ist.

Die Öffnung und der zugeordnete Anker können im übrigen eine im wesentlichen rechteckige Querschnittsgestalt aufweisen, die sehr einfache Verhältnisse hinsichtlich des Stanzwerkzeuges und eine günstige stanzabfallarme Ausnutzung der Dynamobleche gewährleistet. Insbesondere bei Kreisförderern kleinerer Leistung kann die Anordnung mit Vorteil aber auch derart getroffen sein, daß die zentrische Öffnung eine im wesentlichen sternförmige Gestalt mit armförmig abgehenden Teilen aufweist, in deren Bereich Statorpolflächen angeordnet sind, die mit ihren Mitten vorzugsweise auf einem zu der Schwingachse koaxialen gemeinsamen Kreis liegen. Diese Ausbildung ergibt einen sehr gleichmäßigen Antrieb der Schwingplatte.

Vorteilhaft ist es auch, wenn die armförmig abgehenden Teile der Öffnung zumindest einseitig durch ebene Flächen begrenzt sind, denen die Statorpolflächen zugeordnet sind.

Bei der Ausbildung des Schwingförderers als Kreisförderer größerer Leistung kann zweckmäßigerweise das ein- oder mehrteilige Statorblechpaket im wesentlichen ringförmig ausgebildet sein, wobei es mit Vorteil im wesentlichen zylindrisch ist, wenngleich auch andere Formen, bspw. rechteckige oder polygonale Formgestaltung, abhängig von dem Aufbau und dem Einsatzzweck des Schwingförderers, denkbar sind.

Bei vielen Ausführungsformen sowohl als Kreis- als auch als Linearförderer reicht es aus, wenn die für die Standfestigkeit des Schwingförderers erforderliche träge Masse überwiegend durch die Statorblechpakete bzw. das gemeinsame Statorblechpaket gebildet ist bzw. sind. Sollte dies nicht der Fall sein, kann der Schwingförderer eine mit den Statorblechpaketen bzw. dem gemeinsamen Statorblechpaket verbundene zusätzliche träge Masse aufweisen. Dabei ergeben sich bei dem erwähnten Kreisförderer mit im wesentlichen ringförmigem Statorblechpaket besonders günstige Verhältnisse, wenn die träge Masse durch ein Bindemittel zusammengehaltene kleine Masseteile, insbesondere Stanzabfälle von Dynamoblechen, enthält. Dies gestattet es, die unvermeidbar anfallenden Stanzabfälle - oder andere billige Masseteilchen, insbesondere solche aus Metall - nutzbringend zu verwerten.

Bei einem als Kreisförderer ausgebildeten Schwingförderer kann die Schwingplatte mittels einer eigenen Lageranordnung gegenüber dem Statorblechpaketen bzw. dem gemeinsamen Statorblechpaket radial und axial beweglich gelagert sein, um damit eine zusätzliche Führung der Schwingplatte herzustellen. In vielen Fällen wird aber die durch die randseitig angeordneten Federelemente bewirkte Führung der Schwingplatte bereits ausreichen, so daß auf eine eigene zusätzliche Lagerung oder Führung der Schwingplatte verzichtet werden kann.

Die das Statorblechpaket bildenden Dynamobleche werden aus geeigneten Dynamoblechbändern oder -tafeln ausgestanzt.

Insbesondere bei solchen Schwingförderern, bei denen das Statorblechpaket den Anker aufnehmende Öffnungen aufweist, ergeben sich hinsichtlich der Stanzabfälle sehr günstige Verhältnisse, wenn die Dynamobleche der Statorblechpakete bzw. des gemeinsamen Statorblechpaketes aus einem parallelseitig begrenzten Blechstreifen ausgestanzt sind und die Dynamobleche des Ankerblechpaketes aus den aus den Öffnungen ausgestanzten Blechteilen gebildet sind. Während bei Kreisförderern mit kleinem Durchmesser des zylindrischen Stators die einzelnen Bleche noch als Rhomben ausgestanzt werden können, wäre diese Ausführungsform für Kreisförderer größerer Leistung wegen der sich zwangsläufig ergebenden Stanzabfälle unwirtschaftlich. Für solche Kreisförderer mit ringförmigem Statorblechpaket ist es dann vorzuziehen, mittels eines Folgewerkzeuges in dem erwähnten Blechstreifen zwischen benachbarten Öffnungen liegende und von einer Seitenkante ausgehende keilförmige Aussparungen auszustanzen und den Blechstreifen um am Grunde der Aussparungen verbleibende schmale Stege unter Ausbildung eines ringförmigen Stators in der Blechstreifenebene abzubiegen. Dabei kann der Stator aus einzelnen ringförmigen, derart abgebogenen Blechen derart geschichtet sein, daß jeweils ein Blechstreifen vorbestimmter Länge eine ringförmige Schicht bildet, doch kann mit Vorteil die Anordnung auch derart getroffen sein, daß der Blechstreifen unter Ausbildung einzelner flach aufeinanderliegender Schichten des Statorblechpaketes im wesentlichen spiralförmig gebogen ist.

Werden die am Grunde der dreieckförmigen Aussparungen vorhandenen Stege beim Stanzen weggelassen oder durchtrennt, ergibt sich eine Ausbildung, bei der die Statorblechpakete im wesentlichen trapezförmig gestaltet sind. Für kleinere Leistungen eines Kreisförderers können zwei trapezförmige Statorblechpakete mit ihren Breitseiten parallel aufeinander zuweisend - gegebenenfalls unmittelbar aneinander anliegend - angeordnet sein, während bei Kreisförderern mit größerem Durchmesser des ringförmigen Stators die trapezförmigen Statorblechpakete mit parallel aufeinander zuweisenden Schmalseiten aneinander anschließend angeordnet sind. Zwischen den Schmalseiten können Spalte verbleiben; alternativ können die Schmalseiten benachbarter Statorblechpakete auch aneinander anliegen. Die gleichen Statorblechpakete können auch für einen Linearförderer Verwendung finden. In diesem Falle sind sie dann einfach mit zueinander parallelen Breitseiten aufeinanderfolgend angeordnet, wobei es zweckmäßig ist, wenn aufeinanderfolgende trapezförmige Statorblechpakete jeweils um 180° gegeneinander verdreht sind, so daß ihre Schmalseiten unmittelbar parallel zueinander ausgerichtet sind. Eine solche um 180° verdrehte Anordnung der Statorblechpakete ist auch bei dem erwähnten Kreisförderer vorteilhaft, bei dem lediglich zwei trapezförmige Statorblechpakete mit ihren Breitseiten aneinander anschließend angeordnet sind.

Als besonders vorteilhaft hat es sich erwiesen, wenn die Federelemente durch Federdrahtbügel gebildet sind, die einenends an der Schwingplatte und andernends an den Statorblechpaketen bzw. dem gemeinsamen Statorblechpaket oder einer diese bzw. dieses tragenden Grundplatte befestigt sind. Diese Federdrahtbügel sind in Längsrichtung im wesentlichen steif, während sie in Querrichtung biegsam sind; sie können auch als Federstäbe bezeichnet werden. Die Profilform dieser Federelemente hängt von dem Verwendungszweck ab; sie kann kreisrund, polygonal oder sonst zweckentsprechend gewählt sein, wobei auch eine längliche Querschnittsgestalt mit umfaßt wird, die im wesentlichen schienen- oder leistenartige Federelemente ergibt. Dabei kann jeder Federdrahtbügel ein für sich getrenntes Einzelteil sein, doch sind auch Ausführungsformen denkbar, bei denen die Federdrahtbügel Teile eines wenigstens zwei Federdrahtbügel bildenden, entsprechend gebogenen Federdrahtstückes sind. Sie können gerade sein oder in einer vorteilhaften Ausführungsform auch eine im wesentlichen S- oder Z-förmige Gestalt aufweisen.

Die Art der Befestigung der Federdrahtbügel an der Schwingplatte hängt u.a. auch von der speziellen Gestaltung der Schwingplatte und von den sich ergebenden Herstellungs- und Montagebedingungen ab. Einfache Verhältnisse ergeben sich, wenn die Federdrahtbügel an der Schwingplatte und/oder der den Statorblechpaketen bzw. dem Statorblechpaket zugeordneten Grundplatte mittels Klemmringen befestigt sind. Eine andere Möglichkeit besteht darin, daß die Federdrahtbügel an diesen Teilen mittels schellenartiger Befestigungsmittel befestigt sind.

Ganz besonders einfache und zweckmäßige Herstellungs-und Montageverhältnisse ergeben sich, wenn die Federelemente durch schmale, federelastische Stege eines ausgestanzte Ausnehmungen aufweisenden Blechstreifens gebildet sind, durch dessen Ausnehmungen die Stege begrenzt sind und das an der Schwingplatte und/oder den Statorblechpaketen bzw. dem gemeinsamen Statorblechpaket oder der Grundplatte befestigt ist. Dabei können die Stege um ihre Längsachse verwunden sein, derart, daß sie über einen Teil ihrer Länge in Ebenen liegen, die mit der Blechstreifenebene einen vorbestimmten Winkel kleiner 90° einschließen. Durch einfache Bemessung der Stegbreite und -länge sowie der Verwindung der Stege können alle gewünschten Federeigenschaften erzeugt werden, ohne daß dazu zusätzliche eigene Maßnahmen erforderlich wären. Die Verwindung selbst kann mittels eines Verbundwerkzeuges gleich beim Ausstanzen hergestellt werden.

In der Zeichnung sind Ausführungsbeispiele des Gegenstandes der Erfindung dargestellt. Es zeigen:

Fig. 1      einen Schwingförderer gemäß der Erfindung, in der Ausbildung als Kreisförderer in einer schematischen, perspektivischen Darstellung,

Fig. 2      den Schwingförderer nach Fig.1, geschnitten längs der Linie II-II der Fig.3, in einer Draufsicht,

Fig. 3      den Schwingförderer nach Fig. 1, geschnitten längs der Linie III-III der Fig. 2, in einer Seitenansicht,

Fig. 4      den Schwingförderer nach Fig. 1, in einer Teilseitenansicht, in einer abgewandelten Ausführungsform und in einem anderen Maßstab,

Fig. 5      den Schwingförderer nach Fig. 1, in einer weiteren abgewandelten Ausführungsform, in einer Schnittdarstellung ähnlich Fig. 3 und in einem anderen Maßstab,

Fig. 6      den Stator des Schwingförderers nach Fig. 5, ohne Erregerspulen, in einer Draufsicht,

Fig. 7      den Stator des Schwingförderers nach Fig. 5, in abgewandelter Ausführungsform und in einer schematischen, perspektivischen Darstellung,

Fig. 8      einen Dynamoblechstreifen, aus dem der Schwingankermotor des Kreisförders nach Fig. 5 oder 6 hergestellt ist,

Fig. 9      die Antriebseinheit eines als Kreisförderer ausgebildeten Schwingförderers gemäß der Erfindung, in einer anderen Ausführungsform, in einer Darstellung ähnlich Fig. 6,

Fig.10      einen Schwingförderer gemäß der Erfindung, in der Ausbildung als Linearförderer, in einer schematischen Seitenansicht, unter Veranschaulichung einer Grenzstellung der Schwingplatte bei nicht erregten Erregerspulen,

Fig.11      den Schwingförderer nach Fig. 10, mit anderer Anordnung der Federelemente, in einer schematischen Seitenansicht,

Fig.12      den Schwingförderer nach Fig.10, in einer Draufsicht,

Fig. 13      den Schwingförderer nach Fig. 10, geschnitten längs der Linie XIII-XIII der Fig. 10, in einer Seitenansicht und in einem anderen Maßstab,

Fig. 14      den Schwingförderer nach Fig.10, in einer Voderansicht,

Fig. 15      den Stator des Schwingförderers nach Fig. 10, in einer schematischen perspektivischen Darstellung,

Fig. 16 bis 22      verschiedene Ausführungsformen der Federelemente und ihrer Befestigungseinrichtungen des Schwingförderers gemäß der Erfindung, jeweils in einer schematischen Seitenansicht und im Ausschnitt, und

Fig. 23      die Anordnung nach Fig. 18, unter Veranschaulichung einer äußeren Abdichtung, im Schnitt, in einer Seitenansicht und im Ausschnitt.

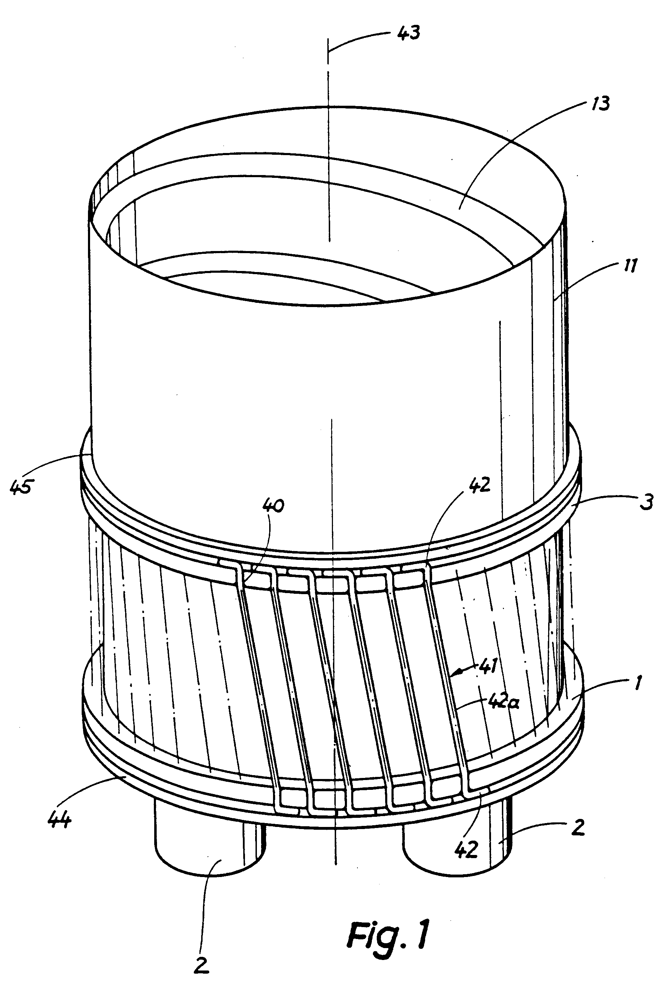

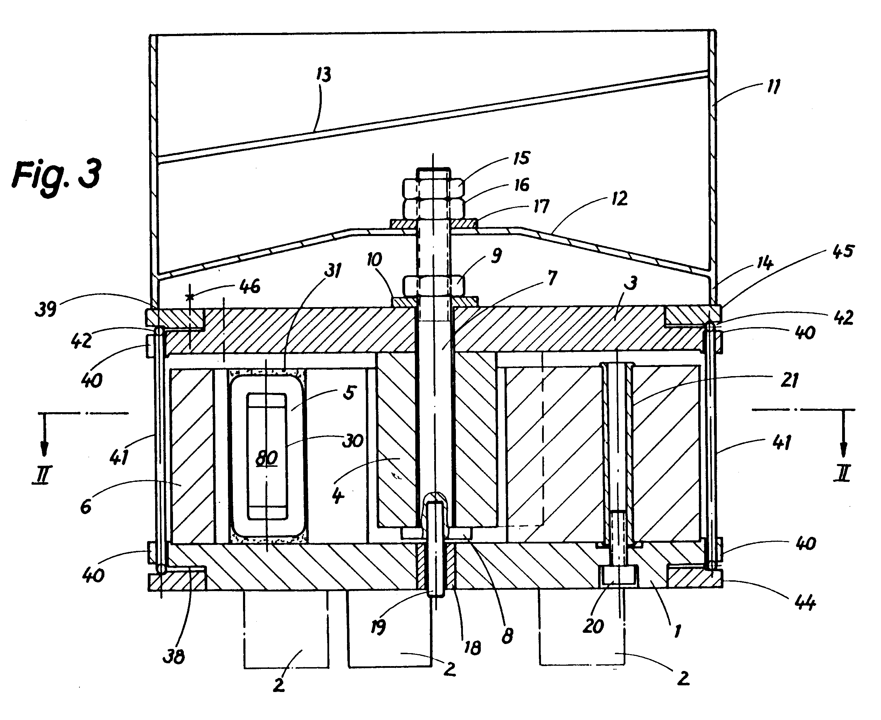

Der in den Fig. 1 bis 8 dargestellte Schwingförderer in der Ausbildung als Kreisförderer weist eine kreiszylindrische, bspw. aus Stahl oder Aluminium gefertigte Bodenplatte 1 auf, mit der er auf mehreren, gleichmäßig auf dem Kreisumfang verteilten Gummimetallfüßen 2 auf einer Unterlage aufgestellt ist. Oberhalb der Bodenplatte 1 ist eine ebenfalls, bspw. aus Stahl oder Aluminium gefertigte, kreiszylindrische Schwingplatte 3 koaxial angeordnet. Zwischen der Bodenplatte 1 und der Schwingplatte 3 befinden sich elektromagnetische Antriebsmittel mit einem geblechten Ankerstern 4, Erregerspulen 5 und einem geblechten Stator 6. Die Schwingplatte 3 ist auf der Bodenplatte 1 über eine zylindrische Achse 7 gelagert, auf der durch einen Bund 8 einerseits sowie eine Mutter 9 und einer Beilagscheibe 10 andererseits die Schwingplatte 3 und der Ankerstern 4 fest miteinander verspannt sind (Fig.3).

Die zylindrische Achse 7 kann bei bestimmten Ausführungsformen des Schwingförderers alternativ auch entfallen oder derart ausgebildet sein, daß sie nach der Montage zu Justierzwecken aus der Zentrierung herausgedreht werden kann, wozu bspw. der Lagerstift 19 exzentrisch ausgebildet oder angeordnet ist.

Auf der Schwingplatte 3 sitzt ein koaxialer kreiszylindrischer Behälter 11, der einen im wesentlichen kegelstumpfförmigen Boden 12 und an seiner Mantelinnenseite befestigte, schraubenförmig nach oben gewundene Förderstege 13 aufweist. Der Behälter 11 ist über seinen stegförmig ausgebildeten unteren Rand 14 auf der Schwingplatte 3 abgestützt und mit zwei Muttern 15,16 und einer Beilagescheibe 17 in der Mitte seines Bodens mit der Achse 7 verschraubt sowie über diese gegen die Schwingplatte 3 fest verspannt. Insbesondere bei großen Behältern könnten diese auch am Umfang befestigt sein.

In die Bodenplatte 1 ist mittig eine Lagerbuchse 18 eingesetzt, in der ein in die Achse 7 eingepaßter Lagerstift 19 drehbar und axial beweglich gelagert ist.

Der als Blechpaket ausgebildete, durch Hohlnieten 21 zusammengehaltene geblechte Stator 6 ist mit Zylinderschrauben 20 fest an der Bodenplatte 1 angeschraubt. Er ist bei der Ausführungsform nach Fig. 1 bis 5 im wesentlichen zylindrisch ausgebildet. Er besteht aus entsprechend ausgestanzten geschichteten Dynamoblechronden, die gegebenenfalls auch überlappt in geschichtete Sektoren aufgeteilt sein können. Der Außendurchmesser des Stators 6 entspricht im wesentlichen dem Durchmesser der Bodenplatte 1 und der Schwingplatte 3, zu denen er koaxial angeordnet ist.

In dem geblechten Stator 6 ist mittig eine im wesentlichen sternförmige Öffnung 22 mit drei parallelflankig begrenzten Armen 23 vorgesehen, deren Arme 23 jeweils mit einer Flanke 24 auf 120° miteinander einschließenden Radien 25 des kreiszylindrischen Stators 6 liegen. Die jeweils anderen Flanken 26 der Arme 23 verlaufen im Abstand zu den Flanken 24 auf gedachten Sekanten des kreiszylindrischen Stators 6, von denen eine bei 27 dargestellt ist. Im radial äußeren Bereich jedes der Arme 23 sind jeweils zwei von dem auf dem Radius 25 liegenden Flanken 24 rechtwinklig abgehende Schlitze 29 vorgesehen, durch die ein dazwischen liegendes, im Querschnitt rechteckiges, geradflankig begrenztes Statorpolstück 30 begrenzt ist, dessen Polfläche 80 somit einen Teil des Armes 23 begrenzt.

Auf jedes Statorpolstück 30 ist eine Erregerspule 5 aufgesetzt, die mittels einer Vergußmasse 31 (Fig.3) auf dem Statorpolstück 30 fixiert ist. Der Abstand der beiden Flanken 24, 26 ist dabei derart gewählt, daß eine Erregerspule 5 zwischen die Flanken 24,26 eingeführt und von dort aus auf das Statorpolstück 30 aufgeschoben werden kann.

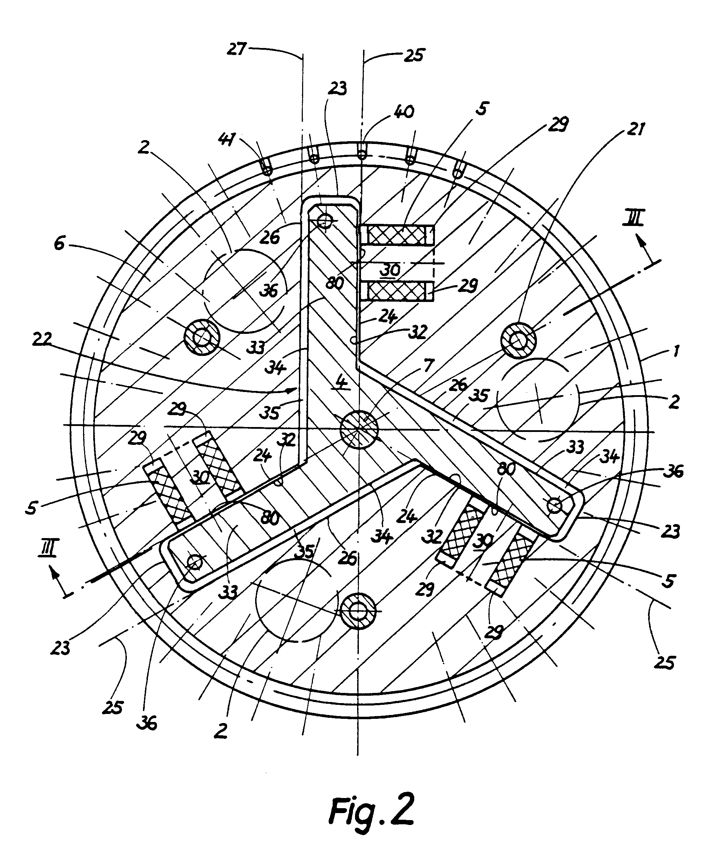

Der mit der Achse 7 verschraubte Ankerstern 4 ist ebenfalls durch ein geschichtetes Blechpaket gebildet; er ragt in die sternförmige Öffnung 22 hinein und ist ähnlich wie diese geformt. Dabei ist die Anordnung derart getroffen, daß eine ebene Flanke 32 jedes der Sternarme 33 eine Ankerpolfläche bildet und zu der ihr gegenüberliegenden parallelen Flanke 24 der Öffnung 22 in der in Fig. 2 dargestellten einen Grenzsstellung parallel verläuft und an dieser Flanke 24 anliegt. Die andere parallele Flanke 34 jedes Sternarmes 33 begrenzt mit der ihr zugeordneten Flanke 26 der Öffnung 22 einen über die Länge im wesentlichen gleich breiten Spalt 35, der die begrenzte Drehbeweglichkeit des Ankersterns 4 gegenüber dem Stator 6 erlaubt.

Der geblechte Ankerstern 4 ist zusätzlich an seinen Sternarmen 33 mittels Schrauben 36 (Fig. 2) mit der Schwingplatte 3 verschraubt.

Im Bereich der äußeren Umrandung sind in der Bodenplatte 1 eine untere Ausdrehung 38 und in der Schwingplatte 3 eine obere Ausdrehung 39 angeordnet. In die Ausdrehungen 38, 39 mündend sind an dem Umfang sowohl in der Bodenplatte 1 als auch in der Schwingplatte 3 achsparallele, gleichmäßig verteilte Schlitze 40 vorgesehen. In die Schlitze 40 sind im wesentlichen Z-förmige Federelemente 41 eingesetzt, die die Schwingplatte 3 und den auf ihr montierten Behälter 11 gegen die Bodenplatte 1 federnd abstützen. Die Federelemente 41 sind aus zylindrischem Federdraht gebogen und weisen an ihren Enden jeweils rechtwinklig abgebogene Winkelstücke 42 (Fig. 1) auf, welche durch in Ruhelage zu der mit 43 bezeichneten Drehachse schrägliegende, geradlinige Abschnitte 42a miteinander verbunden sind. Die Federelemente 41 sind mit ihren unteren bzw. oberen Winkelstücken 42 in gegeneinander um eine Schlitzteilung versetzte Schlitze 40 eingesetzt. Sie sind gegen die Bodenplatte 1 und die Schwingplatte 3 mittels koaxialer Klemmringe 44,45 verspannt, die in den Ausdrehungen 38, 39 angeordnet und mit der Bodenplatte 1 bzw. der Schwingplatte 3 durch Schraubenbolzen 46 verschraubt sind (Fig.3).

Im Ruhezustand weisen die gleichmäßig verteilt angeordneten Federelemente 41 mit ihren geradlinigen Abschnitten 42a jeweils gleiche Neigung gegenüber der Schwingplatte 3 auf, die mit ihrer Oberseite in einer die in Umfangsrichtung weisende Hauptförderrichtung enthaltenden horizontalen Ebene liegt. Die Polstücke 30 bilden mit den Ankersternarmen 33 und den Erregerspulen 5 drei Schwingankermotoren, die einen gemeinsamen Stator 6 aufweisen.

Die Polflächen 80 dieser drei Schwingankermotoren liegen in parallelen Ebenen, die rechtwinklig auf der Schwingplatte 3 stehen; sie sind gleichmäßig verteilt angeordnet.

Im Betrieb sind die Erregerspulen 5 an eine elektrische Wechselstromquelle angeschlossen. Das induzierte Magnetfeld zwingt den Ankerstern 4 gegen die Rückstellkraft der Federelemente 41 zu einer Drehbewegung im Uhrzeigersinn in die in Fig. 2 gezeigte Grenzstellung. Da die Federelemente 41 mit ihren geradlinigen Abschnitten 42a im Ruhestand gleiche Neigung gegenüber der Schwingplatte 3 aufweisen (Fig.1) und der Behälter 11 über die Achse 7 mit dem Ankerstern 4 starr verbunden ist, führt der Behälter 11 gleichzeitig mit der horizontalen Drehbewegung eine Vertikalbewegung aus, die durch die sich ändernde Schräglage der geradlinigen Abschnitte 42a der Federelemente 41 bedingt und durch den translatorischen Freiheitsgrad des Lagerstiftes 19 in der Lagerbuchse 18 ermöglicht ist. Wenn die Erregung der Erregerspulen 5 zu null wird, treibt die Rückstellkraft der Federelemente 41 die Schwingplatte 3 und den Behälter 11 schnell wieder in die Ausgangslage zurück. Durch die Massenträgheit des in dem Behälter 11 befindlichen Transportgutes wird dieses dabei radial nach außen und auf den Förderstegen 13 allmählich nach oben gebracht.

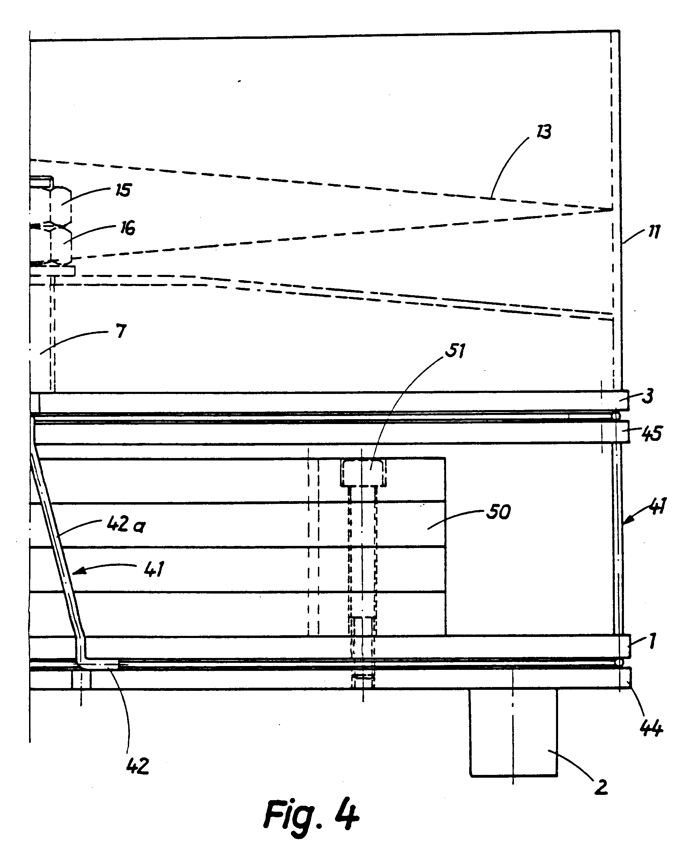

Die in Fig. 4 gezeigte Teilseitenansicht stellt ein abgewandeltes Ausführungsbeispiel dar, bei dem die Bodenplatte 1 und die Schwingplatte 3 gegenüber dem Ausführungsbeispiel nach Fig. 1 derart vergrößert sind, daß zwischen der Bodenplatte 1 und dem zylindrischen Stator 6 noch Raum für eine Zusatzmasse 50 verbleibt, welche durch Zylinderschrauben 51 fest mit der Bodenplatte 1 verschraubt ist. Die Zusatzmasse 50 ist durch kreiszylindrische Ringe gebildet, die den Stator 6 mit kleinem radialen Abstand umschließen.

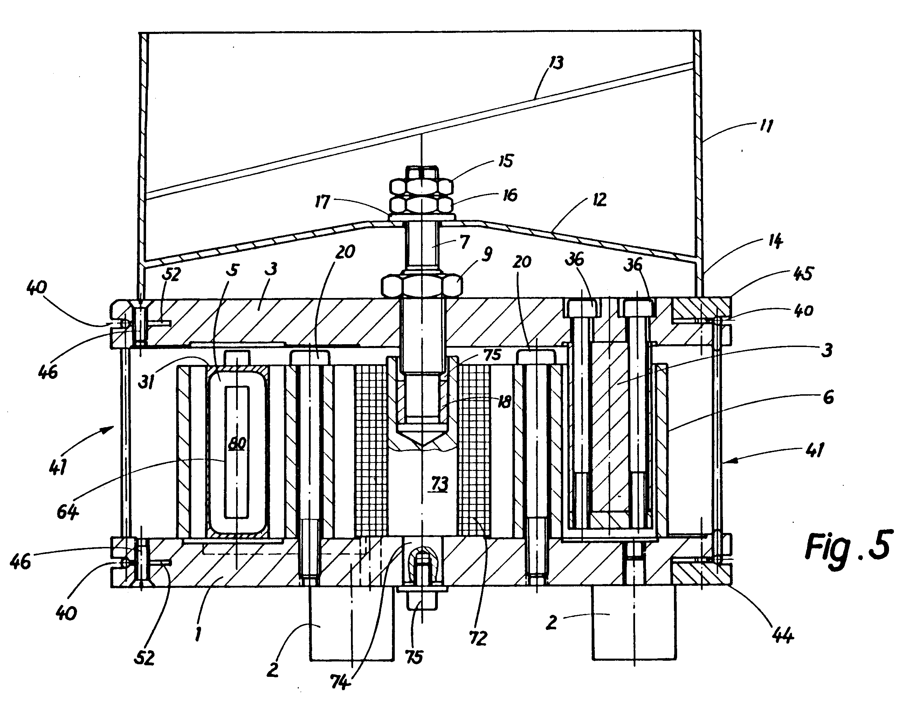

Der in Fig. 5 gezeigte Kreisförderer weist gegenüber dem in Fig. 3 dargestellten einige Änderungen auf. Gleichgebliebene Teile sind mit gleichen Bezugzeichen versehen und nicht nochmals erläutert.

Die Befestigung der Federelemente 41 an Boden- und Schwingplatte 1,3 kann auf verschiedene Weise geschehen. In Fig. 5 sind zwei Möglichkeiten gezeigt:

Entweder sind die Bodenplatte 1 und die Schwingplatte 3 zusätzlich zu den senkrechten Schlitzen 40 mit je einem den ganzen Umfang umfassenden,waagerecht gestuften Klemmschlitz 52 versehen, in dem die Federelemente 41 mit ihren Winkelstücken 42 mittels Senkkopfschrauben 46,durch die den Klemmschlitz 52 begrenzende Wandungsteile axial gegeneinander gezogen werden, fest eingespannt sind (Fig. 5 links), oder die Befestigung der Federelemente 41 erfolgt entsprechend der in Fig. 3 gezeigten Weise mittels Klemmringen 44, 45 und Schraubenbolzen 46 (Fig. 5 rechts).

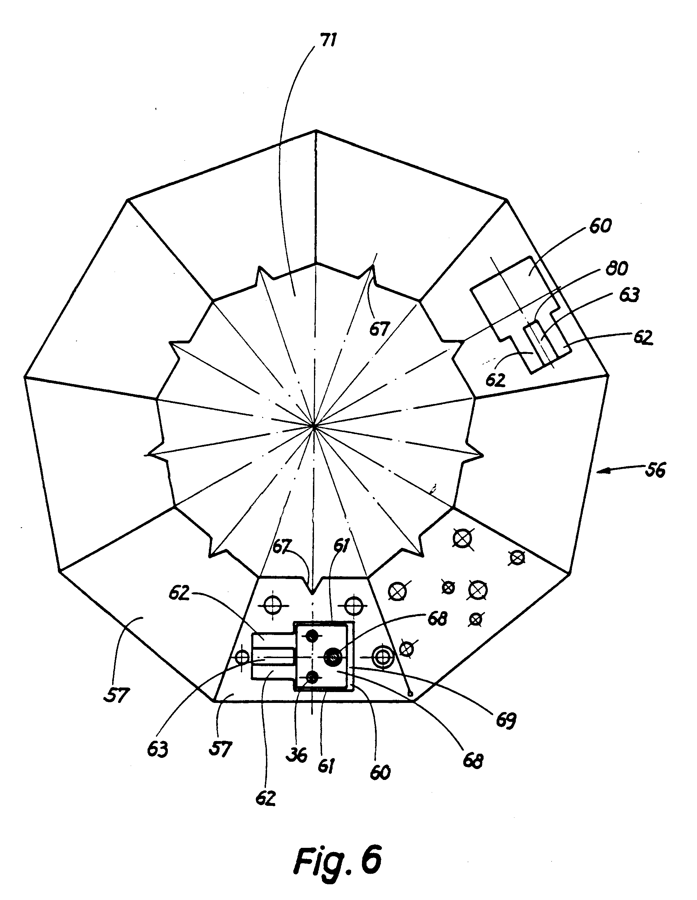

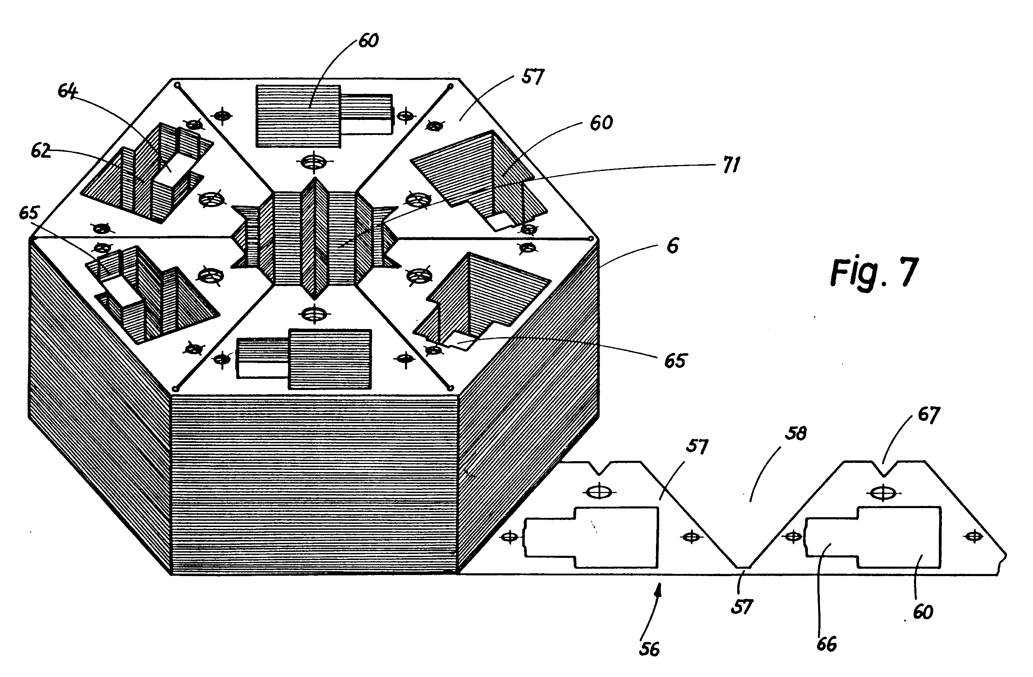

Außerdem ist der gemeinsame Stator 6 - wie es bei größeren Kreisförderern zur Vermeidung von unwirtschaftlich großen Stanzabfallmengen bei der Herstellung sinnvoll ist - wie in Fig. 5 bis 7 gezeigt, aufgebaut: er ist im Querschnitt polygonal; in Fig.6 ist er als Neuneck und in Fig. 7 als Sechseck ausgebildet. Auch andere Polygone sind möglich.

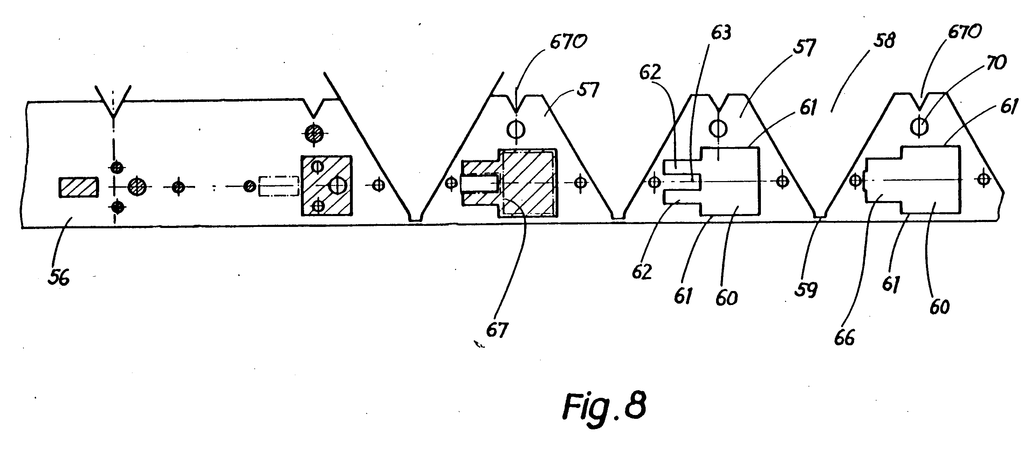

Der Stator 6 besteht aus in Fig. 8 dargestellten, entweder spiral- oder schraubenförmig aufgewickelten oder lagenweise aufgeschichteten Dynamoblechstreifen 56, in denen durch von einer Berandung ausgehende keil-oder dreieckförmige Aussparungen 58 im wesentlichen trapezförmige Statorblechteile 57 begrenzt sind, welche im Bereiche der den Aussparungen 58 gegenüberliegenden Randseite durch schmalle, Sollknickstellen bildende Stege 59 miteinander verbunden sind. Jedes der trapezförmigen Statorblechteile 57 ist mit einer rechteckigen Öffnung 60 versehen, die zwei gegenüberliegende, zu den Randkanten des Dynamoblechstreifens 56 parallel ausgerichtete Kanten 61 aufweist.

Von der linken Seite jeder Öffnung 60 (Fig. 6,8) gehen zwei ebenfalls rechteckige Schlitze 62 rechtwinklig ab, die jeweils zu der oberen bzw. unteren Kante 61 der Öffnung 60 den gleichen Abstand aufweisen und zwischen sich eine längliche Zunge 63 begrenzen, die im geschichteten Zustand einen Teil eines angeschnittenen Statorpolstücks 64 bildet. Der ausgestanzte Dynamoblechstreifen 56 ist an seinen Stegen 59 in der Blechstreifenebene so abgebogen, daß die beiden gleichlangen Seiten der Aussparungen 58 direkt aneinander zu liegen kommen. Durch die Wahl des Winkels, den eine dreieckförmige Aussparung 58 einschließt einerseits und die Abstände der aufeinanderfolgenden, jeweils zwischen zwei Öffnungen 60 liegenden Aussparungen 58 andererseits, ist bei konstanter Breite des Dynamoblechstreifens 56 der Durchmesser des ringförmigen gemeinsamen Stators 6 festgelegt.

Alternativ ist es möglich, die aus einzelnen Statorblechen 57 geschichteten Statorblechpakete der einzelnen Schwingankermotoren, gegebenenfalls mit Abstand voneinander, auf der Bodenplatte 1 getrennt für sich, mit ihren Mittelpunkten auf einem gedachten Kreis liegend, anzuordnen. Somit ist es auf einfache Weise möglich, den Durchmesser der Antriebsmittel und die Zahl der verwendeten Schwingankermotoren zu variieren.

In den eine Anzahl oberer und unterer Lagen des Stators 6 (Fig. 8) bildenden Abschnitten des Dynamoblechstreifens 56 sind die Zungen 63 weggeschnitten und damit rechteckige Ausnehmungen 66 ausgestanzt. In dem geschichteten Stator 6 ergeben sich in der in Fig. 7 ersichtlichen Weise oberhalb und unterhalb der Statorpolstücke 64 Vertiefungen 65, die zur Aufnahme der Wickelköpfe der auf das jeweilige Statorpolstück 64 aufgeschobenen Erregerspule 5 dienen (vgl. Fig. 5).

Die Erregerspule 5 ist mit Kunststoffmasse 31 auf dem Statorpolstück 64 fixiert. Dabei sind die Erregerspule 5, das Statorpolstück 64 und die Öffnung 60 so bemessen, daß die Erregerspule 5 in die Öffnung 60 einführbar ist und auf das Statorpolstück 64 mit in den Schlitzen 62 aufgenommenen Spulenseiten aufgeschoben werden kann, ohne aus dem Stator 6 herauszuragen.

An der den Stegen 59 gegenüberliegenden Randseite ist der Dynamoblechstreifen 56 in regelmäßigen Abständen mit randseitig offenen, dreieckförmigen Ausschnitten 670 versehen, die etwa in der Quersymmetrieachse des zugeordneten Statorblechteils 57 liegen und zur Aufnahme eines Mitnehmerwerkzeugs beim automatischen Aufwickeln des Dynamoblechstreifens 56 zum Statorblechpaket dienen.

Jeder Anker 4 besteht in diesem Fall aus im wesentlichen rechteckigen Ankerblechstücken 67, die zu getrennten, quaderförmigen Ankerblechpaketen geschichtet sind. Diese Ankerblechpakete sind an der Schwingplatte 3 lagerichtig bezüglich der Öffnungen 60 mittels der Schrauben 36 und Paßstiften 68 befestigt, welche durch ausgestanzte Löcher der Ankerblechstücke 67 verlaufen.

Im zusammengebauten Zustand ragen die Anker 4 mit Spiel in die zugehörigen Öffnungen 60 des gemeinsamen Stators 6. Da die Abmessungen der Ankerblechstücke 67 um den Luftspalt 69 (Fig. 6) kleiner sind als die Abmessungen der Öffnung 60, ergeben sie sich unmittelbar aus den aus der Öffnung 60 ausgestanzten Blechstücken, wie in Fig. 8 gestrichelt angedeutet. Damit ist es möglich, mit einem Minimum an Stanzabfall mittels eines Folgewerkzeugs aus dem gleichen Dynamoblechstreifen 56 sowohl die Statorblechteile 57 als auch die Ankerblechstücke 67 auszustanzen. In dem Dynamoblechstreifen 56 sind zusätzlich Löcher 70 zur Aufnahme von Zylinderschrauben 20 angebracht, die den Stator 6 zusammenhalten und dessen Befestigung auf der Bodenplatte 1 erlauben (Fig.5). Der erläuterte Stanzvorgang des Blechstreifens 56 mittels des Folgewerkzeuges ist in Fig. 8 von links nach rechts fortschreitend veranschaulicht.

Der sich im Innern des ringförmigen Stators 6 ergebende freie Raum 71 umschließt zum einen mit Kunststoffmasse vergossenen Dynamoblechanzabfall 72 (Fig.5), und zum anderen einen Bolzen 73, in dem die Achse 7 zentriert gelagert ist. An dem Bolzen 73 ist unten ein Zapfen 74 einstückig angeformt, der in die Bodenplatte 1 eingepaßt ist und mit einer Schraube 75 den Bolzen 73 mit der Bodenplatte 1 fest verspannt. An seinem oberen Ende weist der Bolzen 73 ein koaxiales Sackloch 75 auf, in dem die Lagerbuchse 18 sitzt, die die Achse 7 drehbeweglich und begrenzt axial beweglich lagert. Auf die Achse 7 ist die Schwingplatte 3 aufgeschraubt und mit der Mutter 9 fest verspannt.

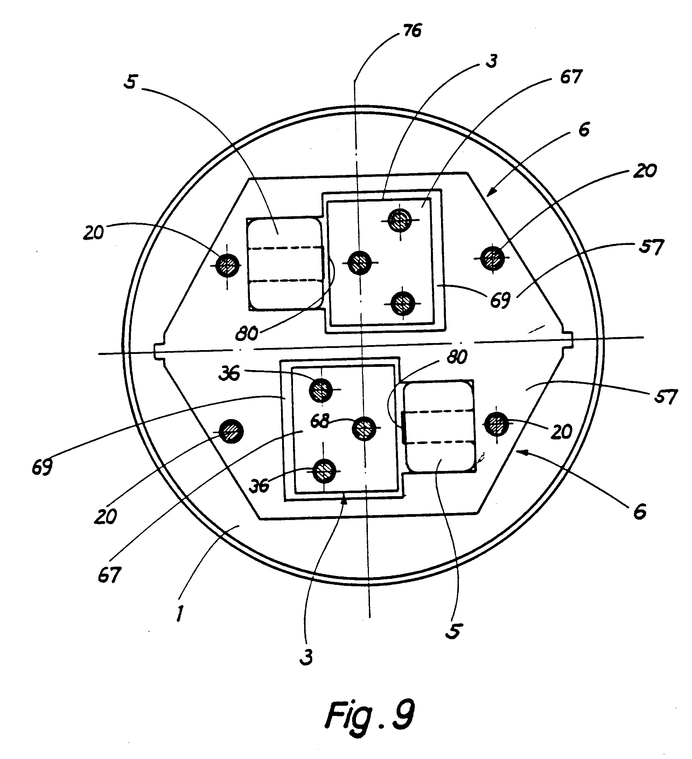

Eine andere Ausführungsform eines Kreisförderers mit kleinem Schwingplattendurchmesser zeigt Fig.9. Der Stator 6 jedes der beiden Schwingankermotoren und deren Anker 3 sind jeweils aus Dynamoblechstücken 57 bzw. 67 paketförmig geschichtet, die, ähnlich wie in Fig. 8 dargestellt, aus einem Dynamoblechstreifen 56 ausgestanzt sind. Gleiche Teile sind deshalb mit gleichen Bezugszeichen versehen und nicht mehr erläutert.

Die Statorblechstücke 57 sind an den Stegen 59 von einander getrennt und mit ihren Breitseiten aneinanderliegend zu den zwei Statorblechpaketen der beiden Schwingankermotoren geschichtet. Dabei sind die Statorblechstücke 57 der beiden Statorblechpakete um $180°$ gegeneinander verdreht aneinander gelegt, so daß die Polstücke 64 einmal rechts und einmal links der bei 76 angedeuteten Querachse liegen, derart, daß ihre Polflächen 85 in gleichem Abstand zu der Querachse 76 stehen und rechtwinklig zu der nicht dargestellten Schwingplatte verlaufen. Durch diese Anordnung ist ein symmetrischer Antrieb bezüglich der Drehachse der Schwingplatte gewährleistet.

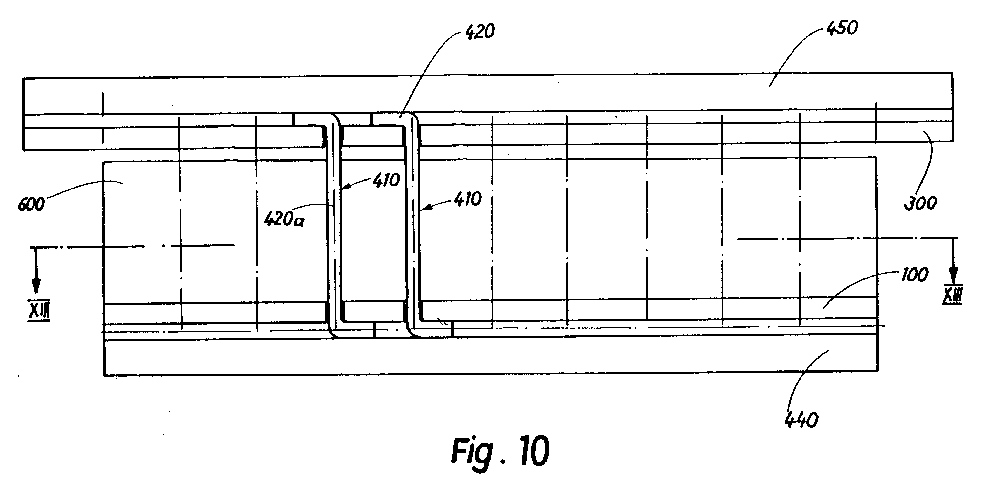

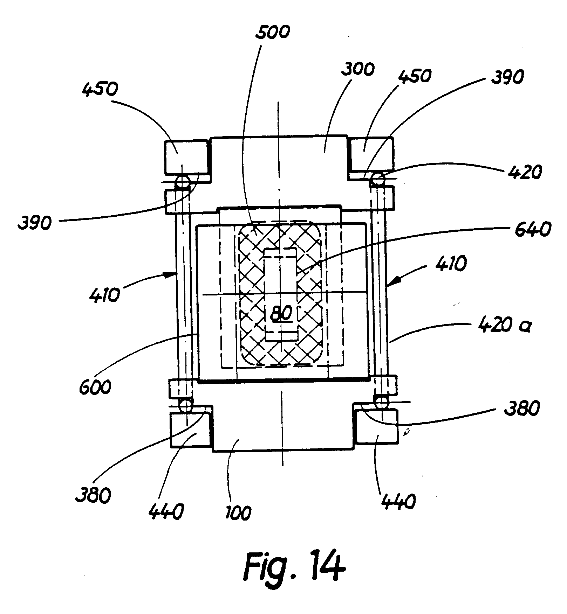

In den Fig. 10 bis 15 ist ein als Linearförderer ausgebildeter Schwingförderer veranschaulicht. Der Linearförderer und die beschriebenen Kreisförderer sind grundsätzlich nach dem gleichen Prinzip aufgebaut. Einander entsprechende oder gleiche Teile sind deshalb der Einfachheit halber mit gleichen Bezugszeichen versehen, wobei zur Unterscheidung bei der Beschreibung des Linearförderers lediglich eine "0" hinzugefügt ist.

Der Linearförderer weist eine längliche, ebene, leistenförmige Grundplatte 100 auf, die entweder ortsfest auf dem Fußboden verankert oder gegen diesen über nicht weiter dargestellte Gummimetallfüße, ähnlich jenen, wie sie in Fig. 1 bei 2 dargestellt sind, abgestützt ist. Im Abstand oberhalb der Grundplatte 100 verlaufend und parallel zu dieser ausgerichtet ist eine im Querschnitt ähnlich gestaltete, ebenfalls leistenförmige Schwingplatte 300 angeordnet, die über Federelemente 410 gegen die Grundplatte 100 elastisch abgestützt ist. Die Federelemente 410 sind gleichgestaltet wie die Federelemente 41 nach den Fig. 1,4; sie sind aus einem zylindrischen Federdraht im wesentlichen Z-förmig gebogen und weisen endseitig zwei rechtwinklig abgebogene Winkelstücke 420 auf, die durch ein geradliniges Teil 420a miteinander verbunden sind. Die Schwingplatte 300 kann eine nicht weiter dargestellte längliche Förderrinne tragen.

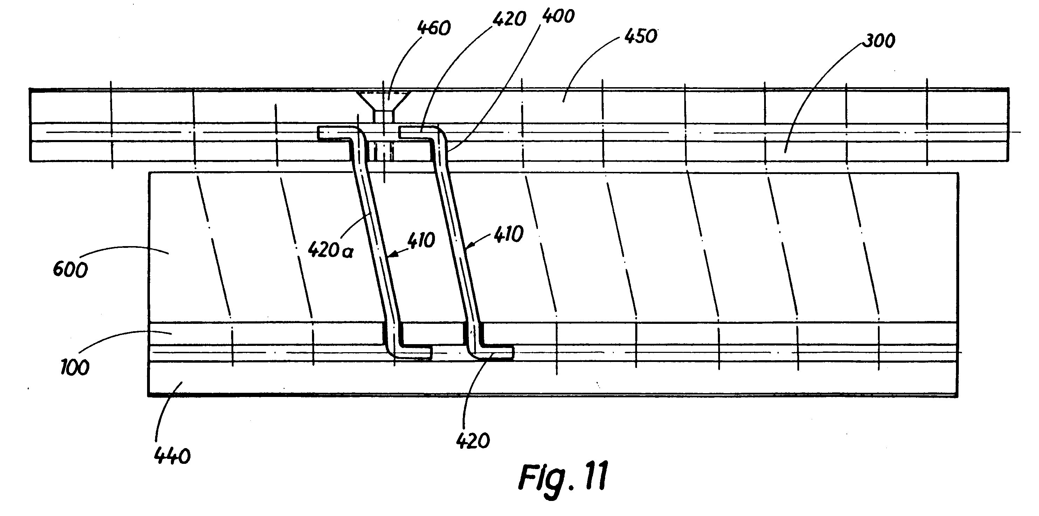

Die länglichen Federelemente 410 sind an der Grundplatte 100 und der Schwingplatte 300 im Bereiche deren seitlicher Längsberandung in gleichen Abständen verteilt angeordnet und mit der Grundplatte 100 und der Schwingplatte 300 verbunden. Ihre geradlinigen Teile 420a weisen die gleiche Neigung gegen eine die in Fig. 11 von links nach rechts horizontal gerichtete Hauptförderrichtung enthaltende Horizontalebene auf, die parallel zu der Schwingplatte 300 ausgerichtet ist. Im Ruhezustand (Fig. 11) schließen die geradlinigen Teile 420a aller Federelemente 410 mit der Schwingplatte 300 und damit der erwähnten Horizontalebene einen Winkel ein, der kleiner als 90° ist (bspw. 75-78°). Zur Befestigung der Federelemente 410 an der Grundplatte 100 und der Schwingplatte 300 sind diese beiden Platten randseitig entsprechend der Teilung der Federelemente 410 mit Schlitzen 400 versehen, in die die Federelemente 410 mit ihren Winkelstücken 420 eingeschoben sind und die in jeweils eine randseitige Ausfräsung 380 bzw. 390 münden. In die Ausfräsungen 380, 390 eingefügte Klemmleisten 440, 450, die mittels Senkschrauben 460 (Fig. 11) mit der Grund- bzw. Schwingplatte 100 bzw. 300 verschraubt sind, bewirken eine feste Verspannung der Winkelstücke 420, wie dies im Grundsatz schon anhand der Fig. 1,3 erläutert wurde.

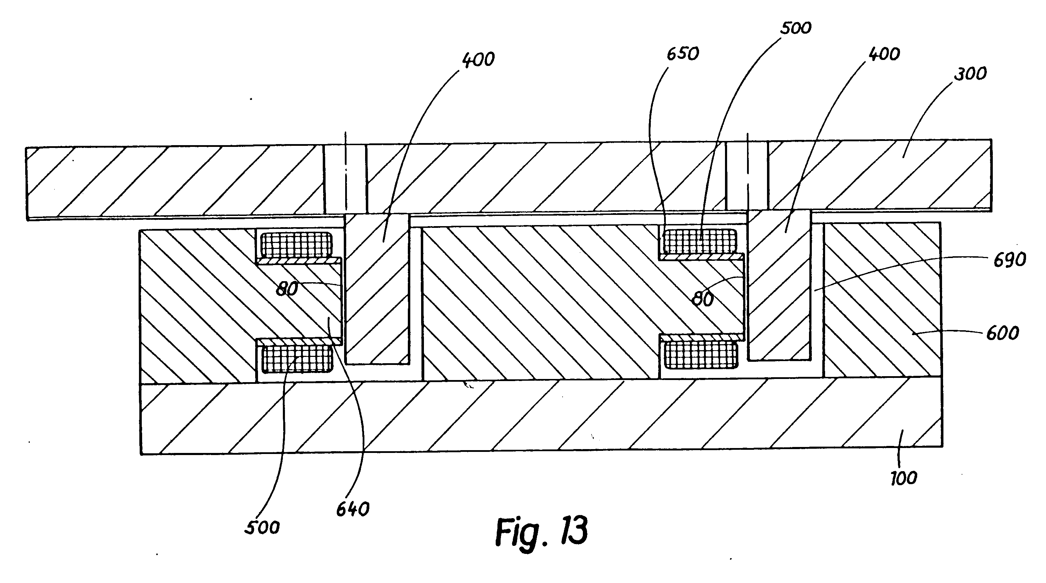

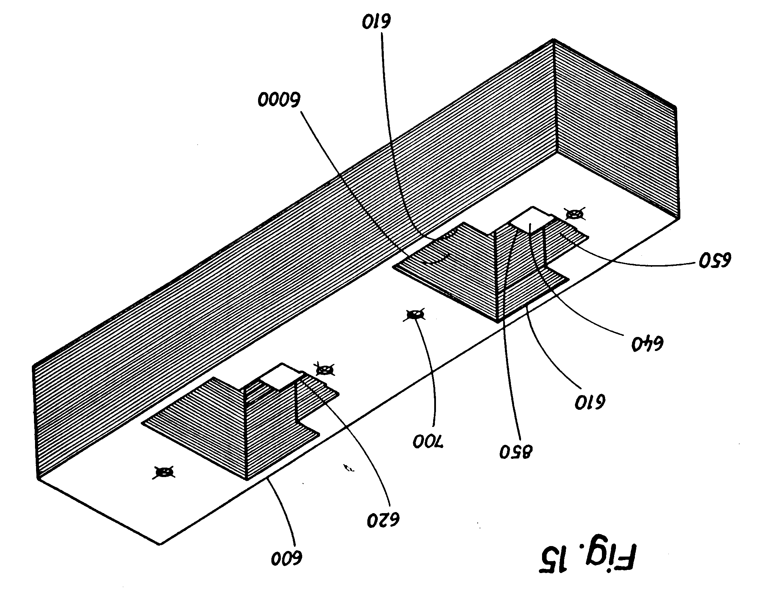

In dem von den an der Grund- und Schwingplatte 100 bzw. 300 randseitig angeordneten Federelementen 410 begrenzten Raum ist ein für zwei Schwingankermotoren gemeinsamer Stator 600 untergebracht, der mit der Grundplatte 100 verschraubt ist und dessen grundsätzlicher Aufbau insbesondere aus den Fig. 13 und 15 zu entnehmen ist:

Der längliche, im Querschnitt rechteckige, parallelflankig begrenzte Anker 600 ist aus Abschnitten des in Fig. 8 dargestellten Dynamoblechstreifen 56 gebildet, die zu einem Statorblechpaket aufeinandergeschichtet sind. In regelmäßigen Abständen sind, symmetrisch zu der Längsmittellinie ausgerichtet, im Querschnitt rechteckige Öffnungen 6000 ausgestanzt, die auf gegenüberliegenden Seiten durch parallel zu den Längskanten des Statorblechpaketes verlaufende parallele Seiten 610 begrenzt sind. In jede der Öffnungen 6000 ragt wiederum ein angeschnittenes Polstück 640, das die Statorpolfläche 80 trägt und beidseitig durch Schlitze 620 begrenzt ist, während an seiner Ober- und Unterseite Vertiefungen 650 freigelassen sind, die zur Aufnahme der Wickelköpfe der auf die Polstücke 640 aufgeschobenen Erregerspulen 500 dienen (Fig. 13).

Die Abmessungen der Öffnungen 6000 in der Längsrichtung des Stators 600 sind derart gewählt, daß jeweils eine fertig gewickelte und isolierte Erregerspule 500 in die Öffnung 6000 eingeführt und von dieser aus auf das Polstück 640 aufgeschoben werden kann, auf dem sie dann durch eine Kunstharzimprägnierung etc. lagefest fixiert wird.

Die den gemeinsamen Stator 600 bildenden Dynamoblechstücke können aus dem Dynamoblechstreifen 56 mit dem gleichen Folgewerkzeug ausgestanzt werden, mit dem die für den Stator 6 des Kreisförderers (Fig. 7) bestimmten Bleche gestanzt werden. Es werden im wesentlichen lediglich jene Werkzeugteile unwirksam gemacht, die die Aussparungen 58 der Fig. 8 ergeben. Die Löcher 700 dienen zur Aufnahme nicht weiter dargestellter Schrauben, die ähnlich den Zylinderschrauben 20 der Fig. 5 das Statorblechpaket zusammenpressen und auf der Grundplatte 100 lagerichtig fixieren.

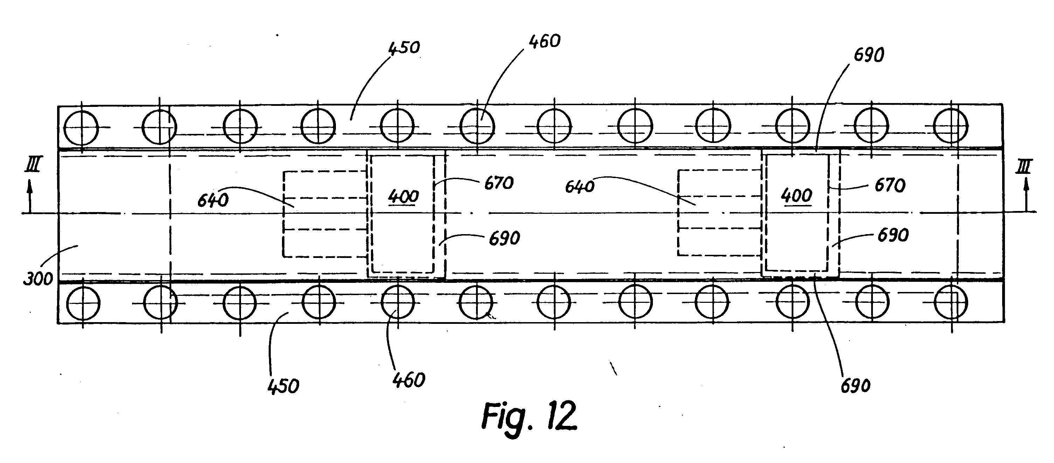

In jede der rechteckigen Öffnungen 6000 des gemeinsamen Stators 600 ragt ein an der Schwingplatte 300 befestigter Anker 400, der durch ein aus rechteckigen Dynamoblechstücken geschichtetes, im wesentlichen blockförmiges Ankerblechpaket gebildet ist. Die ein solches Ankerblechpaket bildenden rechteckigen Ankerblechstücke 670 (Fig. 12) sind, wie die Ankerblechstücke 67, in der aus Fig. 8 ersichtlichen Weise aus dem aus den Öffnungen 6000 ausgestanzten Dynamoblechmaterial hergestellt. Die aus ihnen gebildeten Ankerblechpakete sind, ähnlich wie in Fig. 5 dargestellt, mittels durchgehender Zylinderschrauben an der Schwingplatte 300 festgeschraubt. Sie sind in den Öffnungen 600 begrenzt beweglich. Der zugehörige Luftspalt ist in den Fig. 12, 13 bei 690 angedeutet.

Die Funktion des beschriebenen Linearförderers ist grundsätzlich gleich wie bei dem zuvor erläuterten Kreisförderer:

Im Ruhezustand, d.h. bei nicht erregten Erregerspulen 500, nehmen die Federelemente 410 die in Fig. 11 dargestellte Stellung ein, in der ihre geradlinigen Teile 420a einen spitzen Winkel mit der Horizontalen einschließen. Werden die mit Wechselstrom oder pulsierendem Gleichstrom gespeisten Erregerspulen 500 erregt, so ziehen sie die Anker 400 der beiden Schwingankermotoren in Horizontalrichtung an, womit die Federelemente 410 mit ihren geradlinigen Teilen 420a um ca. 2 bis 3% schräger gelegt werden. Der Luftspalt bei den Statorpolflächen 80 beträgt im Ruhezustand bspw. ca. 2,4 mm und im erregten Zustand ca. 0,4 mm, was einer Schwingamplitude von ca. 2 mm entspricht. Es ergibt sich daraus eine Arbeitsweise des Schwingförderers mit ausgeprägtem sogenannten "Wurfeffekt". Aus dieser Stellung gehen die Federelemente 410 unter der Wirkung ihrer Eigenelastizität wieder in die Ruhestellung nach Fig.11 zurück, sowie die Erregung der Erregerspulen 500 zu 0 wird.

Der Schwingplatte 300 wird dadurch sowohl eine auf-und abgehende als auch eine rechtwinklig dazu (horizontal) hin- und hergehende Schwingbewegung erteilt, die bspw. zum Fördern von Massengütern verwendet werden kann, die etwa in einem nicht weiter dargestellten, auf der Schwingplatte 300 angeordneten Behälter sich befinden.

Die Federelemente 410 können alternativ auch in der aus Fig. 10 ersichtlichen Weise derart angeordnet sein, daß sie im Ruhezustand mit ihren geradlinigen Teilen 420a etwa rechtwinklig zur Horizontalen verlaufend ausgerichtet sind. Bei Erregung der Erregerspulen 500 werden sie in einer Richtung etwas geneigt und dadurch vorgespannt. Unter der Wirkung der Eigenelastizität kehren sie wieder in die Ausgangslage nach Fig.10 zurück, sowie die Erregung verschwindet. Ein derart aufgebauter Schwingförderer arbeitet mit einem ausgeprägten sogenannten "Tischtuch-Wegzieheffekt".

Die Länge des Schwingförderers ist naturgemäß ebensowenig begrenzt wie die Anzahl der in einem entsprechend langen gemeinsamen Stator 600 untergebrachten Schwingankermotoren. Auch sind Ausführungsformen denkbar, bei denen anstelle eines gemeinsamen Statorblechpaketes 600 jeder Öffnung 6000, d.h. jedem Schwingankermotor, ein eigenes entsprechendes Statorblechpaket zugeordnet ist.

Die Ausbildung und die Befestigung der Federelemente 41 bzw. 410 an der Grundplatte 1 bzw. 100 und der Schwingplatte 3 bzw. 300 können in verschiedener Weise erfolgen. Die anhand der Fig. 1,3 und 10,11 erläuterten Ausführungsbeispiele stellen keine Beschränkung dar.

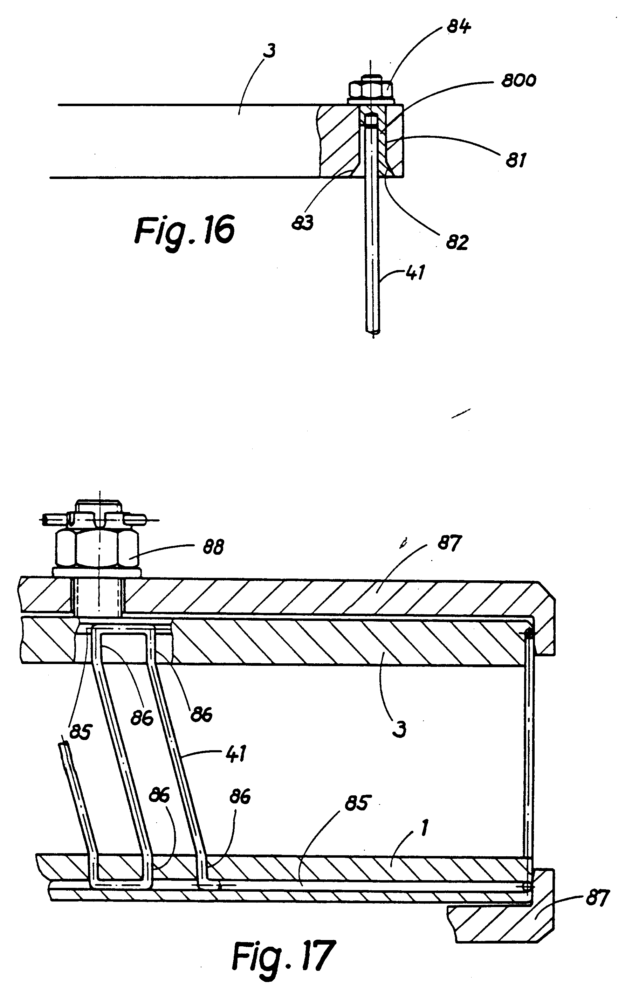

So ist in Fig. 16 eine Ausführungsform veranschaulicht, bei der die Federelemente 41 (bzw. 410) derart abgewandelt sind, daß der jeweils horizontale Teil ihrer Winkelstücke 42 weggelassen ist. Auf dem verbleibenden vertikalen, zylindrischen Teil ist eine Spannhülse 800 aufgesetzt, die in eine entsprechende zylindrische Bohrung 81, bspw. der Schwingplatte 3, eingesetzt ist. Die im Bereiche ihrer Bohrung in bekannter Weise längsgeschlitzte Spannhülse 800 weist endseitig eine kegelförmige Umfangsfläche 82 auf, die mit einem entsprechenden Innenkegel der Bohrung 81 derart zusammenwirkt, daß beim Anziehen einer Spannschraube 84 der Spannhülse 800 das zylindrische Federelement 41 radial verspannt wird.

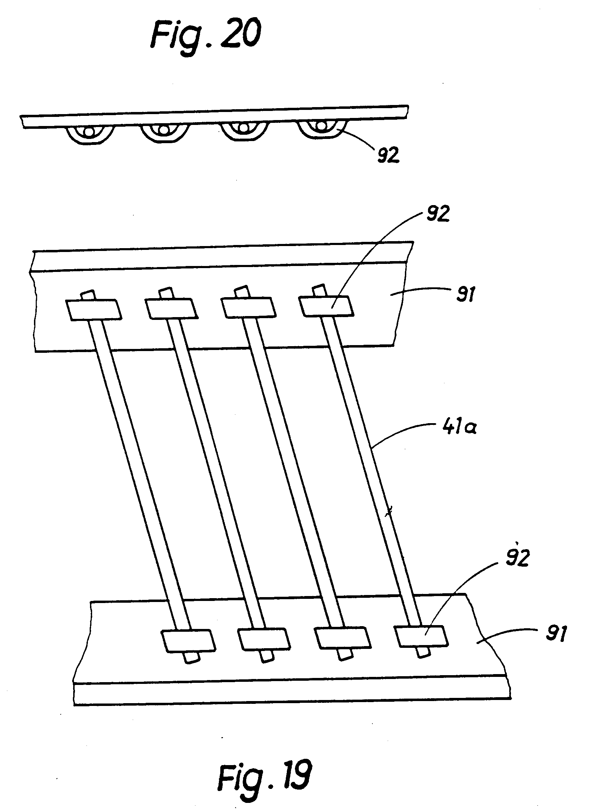

Bei den in den Fig. 17,18 dargestellten Ausführungsformen ist jedes der im wesentlichen ähnlich Fig. 1 bzw. Fig. 11 Z-förmigen Federelemente 41 bzw. 410 durch ein Stück eines entsprechend mäanderförmig gebogenen zylindrischen Federdrahtes gebildet, so daß alle Federelemente 41 - oder zumindest eine Gruppe solcher Federelemente - zusammenhängend ausgebildet sind. Die Befestigung des die Federelemente 41 enthaltenden gitterartigen Drahtgebildes an der Grundplatte 1 und der Schwingplatte 3 (bzw. 100;300) kann in der Weise erfolgen, daß die beiden Platten 1,3 jeweils eine randseitige Nut 85 aufweisen, von der rechtwinklige, randoffene Schlitze 86 abgehen, die in der aus Fig. 17 ersichtlichen Weise die entsprechenden Teile des Drahtgebildes aufnehmen. Die Grundplatte 1 und die Schwingplatte 3 kappenartig übergreifende Klemmschalen 87 sorgen für eine sichere Halterung des Drahtgebildes an der Grundplatte 1 und der Schwingplatte 3. Die Verspannung der Klemmschalen 87 mit den beiden Platten 1,3 kann bspw. über Axialverschraubungen 88 erfolgen.

Eine noch einfachere Befestigungsart zeigt Fig.18. Dabei ist das die Federelemente 41 enthaltende mäanderförmige Drahtgebilde mittels auf die Grundplatte 1 und die Schwingplatte 3 seitlich aufgesetzter Blechbänder 89 befestigt, die die vertikalen Schenkel der Winkelstücke 42 schellenartig umgreifende Sicken 90 aufweisen. Die Blechbänder 89 sind mittels nicht weiter dargestellter Schraubenbolzen befestigt. Die Ausführungsform ist naturgemäß genauso auch für Linearförderer geeignet.

Eine ähnliche Befestigungsart veranschaulichen die Fig. 19,20. Die in diesem Falle durch gerade, schrägliegend angeordnete, zylindrische Federdrahtstücke gebildeten Federelemente 41a sind an der Grundplatte 1 und der Schwingplatte 3 mittels Blechbändern 91 randseitig befestigt, welche angeschnittene, ösenförmig entsprechend herausgebogene Laschen 92 aufweisen, die die Federelemente 41a umfassen und mit diesen verklemmt sind. Auch diese Ausführungsform ist ohne weiteres bei einem Linearförderer einsetzbar.

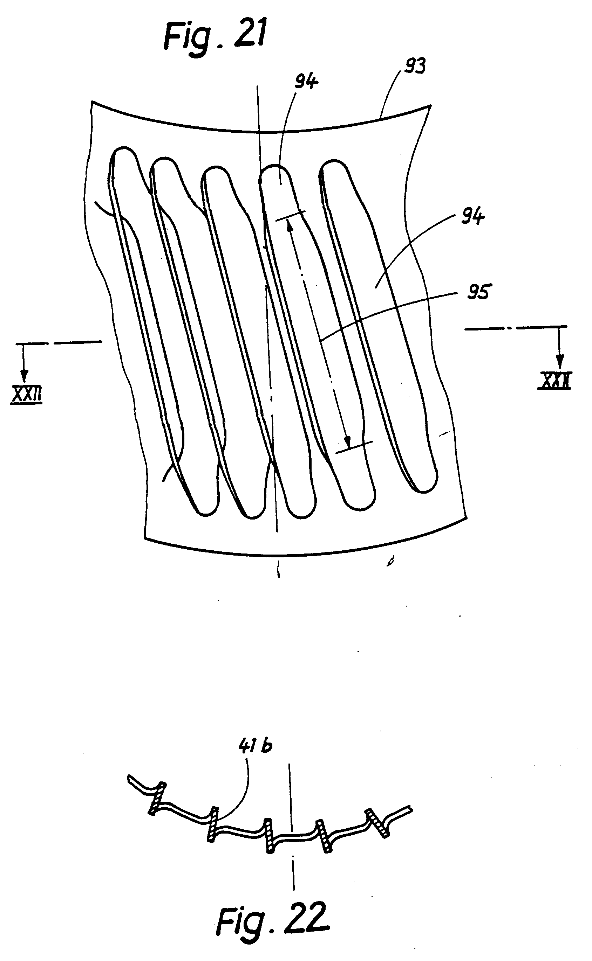

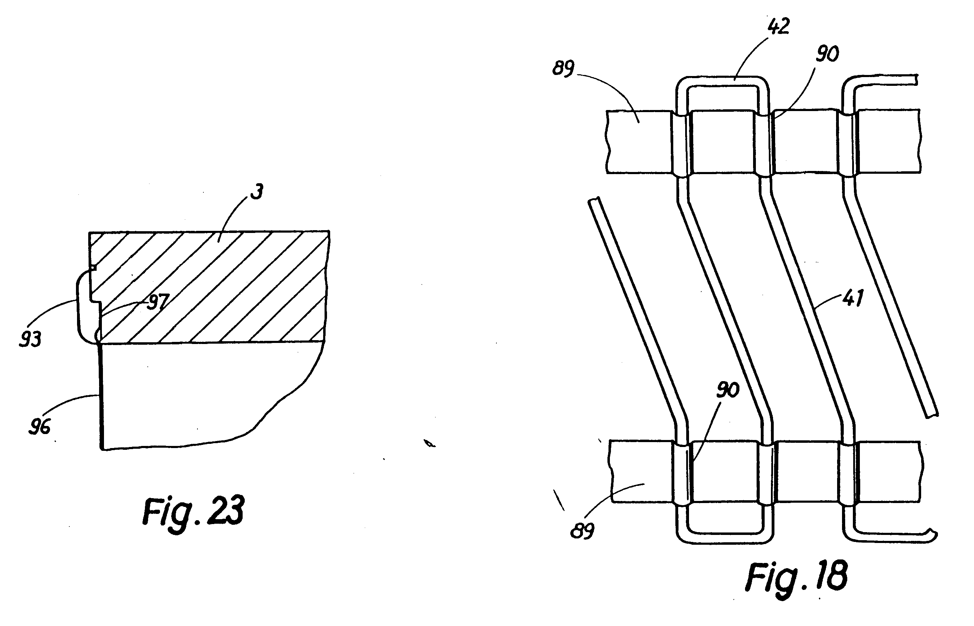

Schließlich ist in den Fig. 21,22 noch eine besonders einfache Ausführungsform dargestellt, bei der die Federelemente nicht durch zylindrische, entsprechend abgebogene Federdrahtstücke, sondern durch schmale Stege 41b gebildet sind, die an einem die Grundplatte 1 (bzw. 100) und die Schwingplatte 3 (bzw. 300) miteinander unmittelbar verbindenden Federblechstreifen 93 ausgebildet sind. Der flachliegend parallelseitig begrenzte Federblechstreifen 93 ist mit in gleicher Neigung schrägliegenden, länglichen Ausstanzungen 94 ausgebildet, die gleichgestaltet in gleichen gegenseitigen Abständen angeordnet sind. Zwischen zwei benachbarten länglichen Ausstanzungen 94 ist jeweils ein ein Federelement 41b bildender Steg begrenzt. Dieser Steg ist über einen in Fig. 21 mit 95 bezeichneten Längenabschnitt, bezogen auf die Blechstreifenebene, um 90° verwunden, so daß sich in diesem Bereich die aus Fig. 22 ersichtliche Querschnittsdarstellung ergibt.

Der Verwindungswinkel in dem Längenbereich 95 kann auch von 90° abweichen; er kann auch über die Länge dieses Abschnittes variieren, wie es auch denkbar ist, die Ausstanzungen 94 randseitig derart zu gestalten, daß sich Stege ergeben, deren Abmessungen sich über ihre Länge in vorbestimmter Weise ändern.

Auch diese Ausführungsform ist für Linearförderer geeignet.

Wenn die Federelemente 41b in der beschriebenen Weise als angeschnittene Stege eines Blechbandes 93 ausgebildet, oder wenn zur Befestigung der Federelemente 41 entsprechend den Fig.18,19 Blechbänder 89,91 Verwendung finden, bietet es sich an, diese Blechbänder 89,91,93 unmittelbar als Befestigungsmittel für eine die elektromagnetischen Antriebsmittel abdichtende Abdichtmanschette 96 zu verwenden, die entsprechend Fig. 23 in einer randseitigen Ausnehmung 97 der Schwingplatte 3 bzw. der Grundplatte 1 liegt und die durch das Blechband 93 unmittelbar an der jeweils zugeordneten Platte festgespannt ist.

Bei den dargestellten Ausführungsbeispielen sowohl des Kreis- als auch des Linearförderers sind die Polflächen 80 der einzelnen Schwingankermotoren rechtwinklig zu der Schwingplatte 3 bzw. 300, d.h. der die Hauptförderrichtung enthaltenden Horizontalebene ausgerichtet. Grundsätzlich sind aber auch Ausführungsformen denkbar, bei denen die Polflächen 80 mit dieser Ebene einen Winkel einschließen, der kleiner oder gleich 90° ist, so daß auf die gegenüberliegenden Ankerpolflächen auch eine Vertikalkomponente der Antriebskraft zur Wirkung kommt.

Der Kreisförderer kann unter Verwendung der gleichen beschriebenen Elemente wahlweise für Rechts- oder Linkslauf eingerichtet werden.

**Patentansprüche**

1. Als Kreis- oder Linearförderer ausgebildeter Schwingförderer mit einer bspw. zur Aufnahme eines Behälters geeigneten Schwingplatte (3; 300), mit der Schwingplatte eine Schwingbewegung mit einer Hauptförderrichtung erteilenden elektromagnetischen Antriebsmitteln in Gestalt von Schwingankermotoren, die einen ortsfesten Stator (6; 600), einen mit der Schwingplatte fest verbundenen Anker (4; 400) und eine aus einer Stromquelle mit Wechselstrom oder pulsierendem Gleichstrom speisbare Erregerspule (5; 500) aufweisen, welche auf ein eine mit einer Ankerpolfläche zusammenwirkende Statorpolfläche (80) tragendes Polstück des Stators aufgesetzt ist, sowie mit länglichen Federelementen (41; 410), durch die die Schwingplatte horizontal und vertikal begrenzt beweglich elastisch abgestützt ist und die zumindest längs eines Teiles der Berandung der Schwingplatte (3; 300) verteilt mit gleicher Neigung gegen eine die Hauptförderrichtung enthaltende Ebene angeordnet und an der Schwingplatte (3; 300) befestigt sind, wobei der jeweils aus Dynamoblechen zu einem Blechpaket geschichtete Anker (4; 400) und Stator (6; 600) wenigstens zweier Schwingankermotoren in dem von den Federelementen (41; 410) umschlossenen Raum angeordnet sind, und wobei die Statorpolflächen (80) mit der Ebene der Schwingplatte denselben Winkel einschließen, sowie mit einer dem Stator zugeordneten trägen Masse, dadurch gekennzeichnet, daß das Statorblechpaket wenigstens eine einseitig zumindest teilweise durch wenigstens eine Statorpolfläche (80) begrenzte Öffnung (22; 60; 600) aufweist, in die ein mit seiner Polfläche auf die Statorpolfläche (80) ausgerichteter Anker (4; 400) ragt, der in der Öffnung mit Spiel (35; 93, 930) begrenzt beweglich ist.

2. Schwingförderer nach Anspruch 1, dadurch gekennzeichnet, daß die Statorpolflächen (80) rechtwinklig zu der Schwingplatte (3; 300) verlaufend angeordnet sind.

3. Schwingförderer nach Anspruch 1, dadurch gekennzeichnet, daß die Statorpolflächen (80) mit der Schwingplatte (3; 300) einen Winkel kleiner 90° einschließend angeordnet sind.

4. Schwingförderer nach einem der vorhergehenden Ansprüche, dadurch gekennzeichnet, daß der Stator (6; 600) und/oder der Anker (4; 400) wenigstens zweier Schwingankermotoren jeweils durch ein diesen Schwingankermotoren gemeinsames Stator- bzw. Ankerblechpaket gebildet ist bzw. sind.

5. Schwingförderer nach einem der vorhergehenden Ansprüche, dadurch gekennzeichnet, daß die Polstücke (64, 640) an dem Statorblechpaket einstückig angeschnitten sind.

6. Schwingförderer nach Anspruch 5 dadurch gekennzeichnet, daß das die jeweilige Statorpolfläche (80) tragende, an die Öffnung (22; 60; 600) anschließend angeordnete Polstück (30; 64; 640) auf zwei gegenüberliegenden Seiten durch zwei in die Öffnung führende Schlitze (29; 39; 390) begrenzt ist, in denen die Spulenseiten der Erregerspule (5; 500) aufgenommen sind.

7. Schwingförderer nach Anspruch 6, dadurch gekennzeichnet, daß das Polstück (30; 64; 640) eine kleinere Höhe als das Statorblechpaket aufweist und zwischen dem Polstück und den zugeordneten Breitseiten des Statorblechpakets die Wickelköpfe der Erregerspule (5; 500) aufnehmende Vertiefungen (65; 650) ausgebildet sind.

8. Schwingförderer nach Anspruch 7, dadurch gekennzeichnet, daß die Vertiefungen (65; 650) eine zumindest der Höhe eines Wickelkopfes entsprechende Tiefe aufweisen.

9. Schwingförderer nach einem der Ansprüche 6 bis 8, dadurch gekennzeichnet, daß die Öffnung (22; 60; 600) in der Verlängerung des Polstückes (30; 64; 640) eine die axiale Länge der Erregerspule (5;500) übersteigende lichte Weite aufweist, derart, daß die Erregerspule in die Öffnung einführbar und von dieser aus auf das Polstück (30; 64; 640) aufschiebbar ist.

10. Schwingförderer nach einem der Ansprüche 6 bis 9 ; dadurch gekennzeichnet, daß die Öffnung (64; 640) und der zugeordnete Anker (4; 400) eine im wesentlichen rechteckige Querschnittsgestalt aufweist.

11. Schwingförderer nach einem der Ansprüche 6 bis 10 in der Ausbildung als Kreisförderer, dadurch gekennzeichnet, daß die zentrische Öffnung (22) eine in wesentlichen sternförmige Gestalt mit armförmig abgehenden Teilen (23) aufweist, in deren Bereich die Statorpolflächen (80) angeordnet sind.

12. Schwingförderer nach Anspruch 11, dadurch gekennzeichnet, daß die armförmig abgehenden Teile (23) der Öffnung (22) zumindest einseitig durch ebene Flächen (24, 26) begrenzt sind, denen die Statorpolflächen (80) zugeordnet sind.

13. Schwingförderer nach einem der vorhergehenden Ansprüche in der Ausbildung als Kreisförderer, dadurch gekennzeichnet, daß das ein- oder mehrteilige Statorblechpaket im wesentlichen ringförmig ausgebildet ist ( Fig. 6).

14. Schwingförderer nach einem der Ansprüche 11 bis 13, dadurch gekennzeichnet, daß das Statorblechpaket im wesentlichen zylindrisch ist.

15. Schwingförderer nach einem der vorhergehenden Ansprüche, dadurch gekennzeichnet, daß er eine mit Statorblechpaketen bzw. dem gemeinsamen Statorblechpaket verbundene zusätzliche träge Masse (50; 72) aufweist.

16. Schwingförderer nach den Ansprüchen 13 und 15, dadurch gekennzeichnet, daß ein von dem ringförmigen Statorblechpaket umschlossener Raum (71) eine zusätzliche träge Masse (72) enthält.

17. Schwingförderer nach Anspruch 16, dadurch gekennzeichnet, daß die träge Masse durch ein Bindemittel zusammengehaltene kleine Masseteile, insbesondere Stanzabfälle von Dynamoblechen, enthält.

18. Schwingförderer nach einem der Ansprüche 1 bis 14, dadurch gekennzeichnet, daß die träge Masse überwiegend durch die Statorblechpakete bzw. das gemeinsame Statorblechpaket gebildet ist bzw. sind.

19. Schwingförderer nach einem der vorhergehenden Ansprüche in der Ausbildung als Kreisförderer, dadurch gekennzeichnet, daß die Schwingplatte (3) mittels einer Lagereinrichtung (7,19; 7,73) gegenüber den Statorblechpaketen bzw. dem gemeinsamen Statorblechpaket radial und axial beweglich gelagert ist.

20. Schwingförderer nach einem der vorhergehenden Ansprüche, dadurch gekennzeichnet, daß die Dynamobleche der Statorblechpakete bzw. des gemeinsamen Statorblechpaketes aus einem parallelseitig begrenzten Blechstreifen (56) ausgestanzt sind und die Dynamobleche (67) des Ankerblechpaketes aus den aus den Öffnungen (60; 600) ausgestanzten Blechteilen gebildet sind.

21. Schwingförderer nach den Ansprüchen 13 und 20, dadurch gekennzeichnet, daß in dem Blechstreifen (56) zwischen benachbarten Öffnungen (60; 600) liegend und von einer Seitenkante ausgehend keilförmige Aussparungen (58) ausgestanzt sind und der Blechstreifen (56) um am Grunde der Aussparungen (58) verbleibende schmale Stege (59) unter Ausbildung eines ringförmigen Stators (6) in die Blechstreifenebene abgebogen ist.

22. Schwingförderer nach Anspruch 21, dadurch gekennzeichnet, daß der Blechstreifen (56) unter Ausbildung einzelner flach aufeinanderliegender Schichten des Statorblechpaketes im wesentlichen spiralförmig gebogen ist.

23. Schwingförderer nach Anspruch 20, dadurch gekennzeichnet, daß die Statorblechpakete (57) im wesentlichen trapezförmig gestaltet sind.

24. Schwingförderer nach Anspruch 23, dadurch gekennzeichnet, daß zwei trapezförmige Statorblechpakete mit ihren Breitseiten parallel aufeinander zuweisend angeordnet sind (Fig. 9).

25. Schwingförderer nach Anspruch 23, dadurch gekennzeichnet, daß die trapezförmigen Statorblechpakete mit parallel aufeinander zuweisenden Schmalseiten aneinander anschließend angeordnet sind.

26. Schwingförderer nach Anspruch 24, dadurch gekennzeichnet, daß die beiden trapezförmigen Statorblechpakete um 180° verdreht zueinander angeordnet sind (Fig. 9).

27. Schwingförderer nach einem der vorhergehenden Ansprüche, dadurch gekennzeichnet, daß die Federelemente (41; 410) durch Federdrahtbügel gebildet sind, die einenends an der Schwingplatte (3; 300) und anderenends an den Statorblechpaketen bzw. dem gemeinsamen Statorblechpaket oder einer diese bzw. dieses tragenden Grundplatte (1; 100) befestigt sind.

28. Schwingförderer nach Anspruch 28, dadurch gekennzeichnet, daß die Federdrahtbügel Teile eines wenigstenszwei Federdrahtbügel bildenden entsprechend gebogenen Federdrahtstückes sind (Fig. 17,18).

29. Schwingförderer nach Anspruch 27 oder 28, dadurch gekennzeichnet, daß die Federdrahtbügel eine im wesentlichen S- oder Z-förmige Gestalt aufweisen.

30. Schwingförderer nach einem der Ansprüche 27 bis 29 dadurch gekennzeichnet, daß die Federdrahtbügel an der Schwingplatte (3; 300) und/oder der Grundplatte (1; 100) mittels Klemmringen (44,45; 440, 450) befestigt sind.

31. Schwingförderer nach einem der Ansprüche 27 bis 30, dadurch gekennzeichnet, daß die Federdrahtbügel an der Schwingplatte (3; 300) und/oder der Grundplatte (1; 100) mittels schellenartiger Befestigungsmittel (89,90) befestigt sind.

32. Schwingförderer nach einem der Ansprüche 1 bis 26, dadurch gekennzeichnet, daß die Federelemente (41b) durch schmale federelastische Stege eines ausgestanzte Ausnehmungen (94) aufweisenden Blechstreifens (93) gebildet sind, durch dessen Ausnehmungen (94) die Stege begrenzt sind und das an der Schwingplatte (3; 300) oder den Statorblechpaketen bzw. dem Statorblechpaket oder der Grundplatte (1;100) befestigt ist.

33. Schwingförderer nach Anspruch 32 dadurch gekennzeichnet, daß die Stege um ihre Längsachse verwunden sind, derart, daß sie über einen Teil (95) ihrer Länge in Ebenen liegen, die mit der Blechstreifenebene einen vorbestimmten Winkel kleiner 90° einschließen.

34. Schwingförderer nach einem der vorhergehenden Ansprüche, dadurch gekennzeichnet, daß der von den Federelementen (41; 410) umschlossene Raum nach außen hin durch eine elastische Manschette (96) abgedichtet ist, die mittels der Befestigungseinrichtungen der Federelemente randseitig zumindest an der Schwingplatte (3; 300) befestigt ist.

**Claims**

1. Jigging conveyor designed as circular or linear conveyor comprising: a vibratory plate (3; 300) suited, for example, for receiving a container; electromagnetic drive means in the form of vibratory armature motors imparting a vibratory movement with a main conveying direction to said vibratory plate, said vibratory armature motors comprising each a stationary stator (6; 600), an armature (4; 400) fixedly connected to said vibratory plate and an excitation coil (5; 500) which can be supplied with AC current or pulsating DC current from a current source and which is placed on a pole piece of said stator carrying a stator pole surface (80) which cooperates with an armature pole surface; and elongate spring elements (41; 410) for elastically supporting said vibratory plate for limited movement horizontally and vertically, said spring elements being distributed along at least part of the rim of said vibratory plate (3; 300) with the same inclination to a plane containing said main conveying direction and being attached to said vibratory plate (3; 300), said armature (4; 400) and said stator (6; 600) of at least two vibratory armature motors each comprised of dynamo sheets which make up a stack of sheets being arranged in the space enclosed by said spring elements (41; 410), and said stator pole surfaces (80) including the same angle with the plane of said vibratory plate, and an inert mass associated with said stator; characterized in that said stack of stator sheets has at least one opening (22; 60; 600) which is delimited on one side at least partly by at least one stator pole surface (80) and into which an armature (4; 400) aligned with its pole surface towards said stator pole surface (80) protrudes, said armature being movable to a limited extent in said opening with play (35; 93, 930).

2. Jigging conveyor as defined in claim 1, characterized in that said stator pole surfaces (80) are arranged so as to extend at right angles to said vibratory plate (3; 300).

3. Jigging conveyor as defined in claim 1, characterized in that said stator pole surfaces (80) are arranged so as to include with said vibratory plate (3; 300) an angle of less than 90°.

4. Jigging conveyor as defined in one of the preceding claims, characterized in that said stators (6; 600) and/or said armatures (4; 400) of at least two vibratory armature motors is/are formed by a stack of stator and armature sheets, respectively, common to these vibratory armature motors.

5. Jigging conveyor as defined in one of the preceding claims, characterized in that said pole pieces (64, 640) are integrally cut on said stack of stator sheets.

6. Jigging conveyor as defined in claim 5, characterized in that said pole piece (30; 64; 640) carrying the respective stator pole surface (80) and arranged adjacent to said opening (22; 60; 600) is limited on two opposite sides by two slots (29; 39; 390) which lead into said opening and in which the coil sides of said excitation coil (5; 500) are received.

7. Jigging conveyor as defined in claim 6, characterized in that said pole piece (30; 64; 640) exhibits a smaller height than said stack of stator sheets, and recesses (65; 650) for receiving the winding heads of said excitation coil (5; 500) are formed between said pole piece and the associated broad sides of said stack of stator sheets.

8. Jigging conveyor as defined in claim 7, characterized in that said recesses (65; 650) have a depth which corresponds to at least the height of a winding head.

9. Jigging conveyor as defined in one of claims 6 to 8, characterized in that said opening (22; 60;

600) has in the extension of said pole piece (30; 64; 640) a clear width which exceeds the axial length of said excitation coil (5; 500) such that said excitation coil can be introduced into said opening and pushed from it onto said pole piece (30; 64; 640).

10. Jigging conveyor as defined in one of claims 6 to 9, characterized in that said opening (64; 640) and said associated armature (4; 400) have an essentially rectangular cross-sectional shape.

11. Jigging conveyor as defined in one of claims 6 to 10 designed as circular conveyor, characterized in that said central opening (22) is of essentially star-shaped design with arm-like protruding parts (23) in the region of which said stator pole surfaces (80) are arranged.

12. Jigging conveyor as defined in claim 11, characterized in that said arm-like protruding parts (23) of said opening (22) are delimited at least on one side by flat surfaces (24, 26) with which said stator pole surfaces (80) are associated.

13. Jigging conveyor as defined in one of the preceding claims designed as circular conveyor, characterized in that said one or multipart stack of stator sheets is of essentially ring-shaped design (Figure 6).

14. Jigging conveyor as defined in one of claims 11 to 13, characterized in that said stack of stator sheets is essentially cylindrical.

15. Jigging conveyor as defined in one of the preceding claims, characterized in that it comprises an additional inert mass (50; 72) connected to stacks of stator sheets or said common stack of stator sheets.

16. Jigging conveyor as defined in claims 13 and 15, characterized in that a space (71) enclosed by said ring-shaped stack of stator sheets contains an additional inert mass (72).

17. Jigging conveyor as defined in claim 16, characterized in that said inert mass contains small mass parts, in particular stamping waste of dynamo sheets, held together by a binder.

18. Jigging conveyor as defined in one of claims 1 to 14, characterized in that said inert mass is predominantly formed by said stacks of stator sheets or said common stack of stator sheets.

19. Jigging conveyor as defined in one of the preceding claims designed as circular conveyor, characterized in that said vibratory plate (3) is mounted by means of a mounting device (7, 19; 7, 73) for movement in the radial and axial directions in relation to said stacks of stator sheets or said common stack of stator sheets.

20. Jigging conveyor as defined in one of the preceding claims, characterized in that said dynamo sheets of said stacks of stator sheets or said common stack of stator sheets are stamped out of a sheet metal strip (56) limited on parallel sides, and said dynamo sheets (67) of said stack of armature sheets are formed from the sheet parts stamped out of said openings (60; 600).

21. Jigging conveyor as defined in claims 13 and 20, characterized in that wedge-shaped recesses (58) starting from a side edge and lying between adjacent openings (60; 600) are stamped out of said sheet metal strip (56), and said sheet metal strip (56) is bent in the sheet metal strip plane around narrow webs (59) remaining at the bottom of said recesses (58), thereby forming a ring-shaped stator (6).

22. Jigging conveyor as defined in claim 21, characterized in that said sheet metal strip (56) is bent in essentially spiral configuration, thereby forming individual layers of said stack of stator sheets lying flat on one another.

23. Jigging conveyor as defined in claim 20, characterized in that said stacks of stator sheets (57) are of essentially trapezoidal design.

24. Jigging conveyor as defined in claim 23, characterized in that two trapezoidal stacks of stator sheets are arranged so as to point parallel towards one another with their broad sides (Figure 9).

25. Jigging conveyor as defined in claim 23, characterized in that said trapezoidal stacks of stator sheets are arranged adjacent to one another with narrow sides pointing parallel towards one another.

26. Jigging conveyor as defined in claim 24, characterized in that said two trapezoidal stacks of stator sheets are arranged such that they are turned through 180° in relation to one another (Figure 9).

27. Jigging conveyor as defined in one of the preceding claims, characterized in that said spring elements (41; 410) are formed by spring wire brackets which are attached at one end to said vibratory plate (3; 300) and at the other end to said stacks of stator sheets or said common stack of stator sheets or to a base plate (1; 100) carrying these or this.

28. Jigging conveyor as defined in claim 28, characterized in that said spring wire brackets are parts of a correspondingly bent spring wire piece forming at least two spring wire brackets (Figures 17, 18).

29. Jigging conveyor as defined in claim 27 or 28, characterized in that said spring wire brackets are of essentially S- or Z-shape.

30. Jigging conveyor as defined in one of claims 27 to 29, characterized in that said spring wire brackets are attached to said vibratory plate (3; 300) and/or said base plate (1; 100) by means of clamping rings (44, 45; 440, 450).

31. Jigging conveyor as defined in one of claims 27 to 30, characterized in that said spring wire brackets are attached to said vibratory plate (3; 300) and/or said base plate (1; 100) by means of clip-type attachment means (89, 90).

32. Jigging conveyor as defined in one of claims 1 to 26, characterized in that said spring elements (41b) are formed by narrow spring-elastic webs of a sheet metal strip (93) having stamped-out recesses (94) which limit said webs, and said sheet metal strip is attached to said vibratory plate (3; 300) or said stacks of stator sheets or said stack of stator sheets or said base plate (1; 100).

33. Jigging conveyor as defined in claim 32, characterized in that said webs are wound around their longitudinal axis such that over part (95) of their length they lie in planes which include a predetermined angle of less than 90° with said sheet metal strip plane.

34. Jigging conveyor as defined in one of the preceding claims, characterized in that said space enclosed by said spring elements (41; 410) is sealed off outwardly by an elastic sleeve (96) which is attached at the rim at least to said vibratory plate (3; 300) by the attachment devices of said spring elements.

**Revendications**

1. Convoyeur oscillant agencé sous la forme d'un convoyeur circulaire ou d'un convoyeur linéaire comportant un plateau oscillant (3; 300) adapté par exemple pour recevoir un conteneur, des moyens d'entraînement électromagnétiques qui produisent avec le plateau oscillant un mouvement oscillant dans une direction de transport principale et qui se présentent sous la forme de moteurs à induit oscillant munis d'un stator (6; 600) fixe, d'un induit (4; 400) solidaire du plateau oscillant et d'une bobine d'excitation (5; 500) qui peut être alimentée à partir d'une source de courant alternatif ou de courant continu pulsatoire et qui est montée sur un élément polaire du stator portant une surface polaire de stator (80) qui coopère avec une surface polaire d'induit, des éléments élastiques (41; 410) allongés qui supportent élastiquement le plateau oscillant, avec possibilité de déplacement limité dans les directions horizontale et verticale, qui sont répartis au moins le long d'une partie du bord du plateau oscillant (3; 300) avec une même inclinaison par rapport à un plan contenant la direction de transport principale et qui sont fixés sur le plateau oscillant (3; 300), l'induit (4; 400) et le stator (6; 600), formés chacun de tôles pour dynamo assemblées en paquets, d'au moins deux moteurs à induit oscillant étant disposés dans l'espace entouré par les éléments élastiques (41; 410) et les surfaces polaires de stator (80) formant le même angle avec le plan du plateau oscillant, et comportant encore une masse d'inertie associée au stator, caractérisé en ce que le paquet de tôles de stator présente au moins une ouverture (22; 60; 600) délimitée d'un côté, au moins partiellement, par au moins une surface polaire de stator (80), dans laquelle pénètre un induit (4; 400) dont la surface polaire est tournée vers la surface polaire de stator (80) et qui peut se déplacer de manière limitée avec jeu dans l'ouverture (35; 93; 930).

2. Convoyeur oscillant selon la revendication 1, caractérisé en ce que les surfaces polaires de stator (80) sont disposées perpendiculairement au plateau oscillant (3; 300).

3. Convoyeur oscillant selon la revendication 1, caractérisé en ce que les surfaces polaires de stator (80) forment un angle inférieur à 90° avec le plateau oscillant (3; 300).

4. Convoyeur oscillant selon l'une des revendications précédentes, caractérisé en ce que le stator (6; 600) et/ou l'induit (4; 400) d'au moins deux moteurs à induit oscillant est ou sont formé(s) par un paquet de tôles de stator ou de tôles d'induit commun auxdits deux moteurs à induit oscillant.

5. Convoyeur oscillant selon l'une des revendications précédentes, caractérisé en ce que les éléments polaires (64; 640) sont découpés d'une pièce avec le paquet de tôles de stator.

6. Convoyeur oscillant selon la revendication 5, caractérisé en ce que l'élément polaire (30; 64; 640) qui porte la surface polaire de stator (80) concernée et qui est disposé à la suite de l'ouverture (22; 60; 600) est délimité sur deux côtés opposés par deux fentes (29; 39; 390) qui débouchent dans l'ouverture et dans lesquelles se logent les côtés de la bobine d'excitation (5; 500).

7. Convoyeur oscillant selon la revendication 6, caractérisé en ce que l'élément polaire (30; 64; 640) présente une hauteur inférieure à celle des paquets de tôles de stator et des cavités (65; 650) qui reçoivent les têtes de la bobine d'excitation (5; 500) sont aménagées entre l'élément polaire et les grands côtés associés du paquet de tôles de stator.

8. Convoyeur oscillant selon la revendication 7, caractérisé en ce que les cavités (65; 650) présentent une profondeur qui correspond au moins à la hauteur d'une tête de bobine.

9. Convoyeur oscillant selon l'une des revendications 6 à 8, caractérisé en ce que l'ouverture (22; 60; 600) dans le prolongement de l'élément polaire (30; 64; 640) présente une dimension intérieure qui est supérieure à la longueur axiale de la bobine d'excitation (5; 500) de telle sorte que l'on peut engager la bobine d'excitation dans l'ouverture et de là, l'enfiler sur l'élément polaire (30; 64; 640).

10. Convoyeur oscillant selon l'une des revendications 6 à 9, caractérisé en ce que l'ouverture (60; 600) et l'induit associé (4; 400) ont une section de forme essentiellement rectangulaire.

11. Convoyeur oscillant selon l'une des revendications 6 à 10 agencé en convoyeur circulaire, caractérisé en ce que l'ouverture centrale (22) présente une forme essentiellement en étoile avec des parties (23) en forme de bras dans la région desquelles sont aménagées les surfaces polaires de stator (80).

12. Convoyeur oscillant selon la revendication 11, caractérisé en ce que les parties (23) en forme de bras de l'ouverture (22) sont délimitées sur un côté au moins par des surfaces planes (24;

26) auxquelles sont associées les surfaces polaires de stator (80).

13. Convoyeur oscillant selon l'une des revendications précédentes agencé en convoyeur circulaire, caractérisé en ce que le paquet de tôles de stator réalisé en une ou en plusieurs parties est essentiellement annulaire (figure 6).

14. Convoyeur oscillant selon l'une des revendications 11 à 13, caractérisé en ce que le paquet de tôles de stator est essentiellement cylindrique.

15. Convoyeur oscillant selon l'une des revendications précédentes, caractérisé en ce qu'il présente une masse d'inertie (50; 72) supplémentaire liée à des paquets de tôles de stator ou au paquet de tôles de stator commun.

16. Convoyeur oscillant selon l'une des revendications 13 et 15, caractérisé en ce qu'un espace (71) entouré par le paquet de tôles de stator annulaire contient une masse d'inertie (72) supplémentaire.

17. Convoyeur oscillant selon la revendications 16, caractérisé en ce que la masse d'inertie est constituée de petits éléments de masse, en particulier de chutes provenant de la découpe des tôles pour dynamo, assemblés par un liant.

18. Convoyeur oscillant selon l'une des revendications 1 à 14, caractérisé en ce que la masse d'inertie est formée essentiellement des paquets de tôles de stator ou du paquet de tôles de stator commun.

19. Convoyeur oscillant selon l'une des revendications précédentes agencé en convoyeur circulaire, caractérisé en ce que le plateau oscillant (3) est supporté par un dispositif support (7, 19; 7,73) avec possibilité de déplacement radial et axial par rapport aux paquets de tôles de stator ou du paquet de tôles de stator commun.

20. Convoyeur oscillant selon l'une des revendications précédentes, caractérisé en ce que les tôles pour dynamo des paquets de tôles de stator ou du paquet de tôles de stator commun sont découpées dans une bande de tôle (56) à bord parallèles et les tôles pour dynamo (67) du paquet de tôles d'induit sont formées par les morceaux de tôle provenant des ouvertures (60; 600).

21. Convoyeur oscillant selon les revendications 13 et 20 caractérisé en ce que des évidements (58) en forme de coins sont découpés dans la bande de tôle (56), entre des ouvertures (60; 600) voisines à partir d'un bord latéral, et la bande de tôle (56) est pliée dans le plan de la bande de tôle au niveau de cordons (59) étroits qui subsistent au fond des évidements (58) pour former un stator annulaire (6).

22. Convoyeur oscillant selon la revendication 21, caractérisé en ce que la bande de tôle (56) est pliée essentiellement en spirale pour former différentes couches superposées à plat du paquet de tôles de stator.

23. Convoyeur oscillant selon la revendication 20, caractérisé en ce que les paquets de tôles de stator (57) sont agencés essentiellement en forme de trapèze.

24. Convoyeur oscillant selon la revendication 23, caractérisé en ce que deux paquets de tôles de stator en forme de trapèze sont disposés parallèlement l'un à l'autre avec leur grand côté en regard l'un de l'autre (figure 9).

25. Convoyeur oscillant selon la revendication 23, caractérisé en ce que les paquets de tôles de stator en forme de trapèze sont disposés parallèlement l'un à la suite de l'autre avec leur petit côté en regard l'un de l'autre.

26. Convoyeur oscillant selon la revendication 24, caractérisé en ce que les deux paquets de tôles de stator en forme de trapèze sont tournés de 180° l'un par rapport à l'autre (figure 9).

27. Convoyeur oscillant selon l'une des revendications précédentes, caractérisé en ce que les éléments élastiques (41; 410) sont formés par des étriers en fil à ressort qui sont fixés d'un côté sur le plateau oscillant (3; 300) et de l'autre côté sur les paquets de tôles de stator ou le paquet de tôles de stator commun ou sur une plaque de base (1; 100) qui porte ceux-ci ou celui-ci.

28. Convoyeur oscillant selon la revendication 27, caractérisé en ce que les étriers en fil à ressort font partie d'un élément en fil à ressort plié de manière adéquate qui forme au moins deux étriers en fil à ressort (figures 17, 18).

29. Convoyeur oscillant selon la revendication 27 ou 28, caractérisé en ce que les étriers en fil à ressort présentent essentiellement une forme de S ou de Z.

30. Convoyeur oscillant selon l'une des revendications 27 à 29, caractérisé en ce que les étriers en fil à ressort sont fixés au moyen de bagues de serrage (44, 45; 440, 450) sur le plateau oscillant (3; 300) et/ou sur la plaque de base (1; 100).

31. Convoyeur oscillant selon l'une des revendications 27 à 30, caractérisé en ce que les étriers en fil à ressort sont fixés sur le plateau oscillant (3; 300) et/ou sur la plaque de base (1; 100) par des moyens de fixation (89, 90) de type collier.

32. Convoyeur oscillant selon l'une des revendications 1 à 26, caractérisé en ce que les éléments élastiques (41b) sont formés par des cordons étroits élastiques d'une bande de tôle (93) qui présente des évidements (94) découpés qui délimitent les cordons et qui est fixée sur le plateau oscillant (3; 300) ou sur les paquets de tôles de stator ou le paquet de tôles de stator ou sur la plaque de base (1; 100).

33. Convoyeur oscillant selon la revendication 32, caractérisé en ce que les cordons sont tordus autour de leur axe longitudinal de manière telle qu'ils soient situés, sur une partie (95) de leur longueur, dans des plans qui forment un angle prédéterminé inférieur à 90° avec le plan de la bande de tôle.

34. Convoyeur oscillant selon l'une des revendications précédentes, caractérisé en ce que l'espace entouré par les éléments élastiques (41; 410) est fermé de manière étanche vers l'extérieur par un manchon élastique (96) qui est fixé sur le bord au moins sur le plateau oscillant (3; 300) à l'aide des dispositifs de fixation des éléments de ressort.

Fig.1

Fig. 2

Fig. 3

EP 0 288 699 B1

*Fig. 4*

Fig.5

**Fig. 6**

Fig. 7

EP 0 288 699 B1

Fig.8

EP 0 288 699 B1

Fig. 9

Fig. 10

EP 0 288 699 B1

Fig. 11

EP 0 288 699 B1

Fig. 12

EP 0 288 699 B1

Fig. 13

EP 0 288 699 B1

Fig. 14

Fig. 15

Fig.16

Fig.17

# Fig. 20

92

# Fig. 19

92

91

41a

92

91

## Fig. 21

## Fig. 22

36

Fig. 18

Fig. 23